# EUROPÄISCHE PATENTANMELDUNG

(11) **EP 4 844 955 A1**
(43) Veröffentlichungstag der Anmeldung: **25.11.2026**
(21) Anmeldenummer: 25178535.8
(22) Anmeldetag: 23.05.2025
(51) Int. Cl.: H01R 13/00, B60L 53/302, H01B 7/00, H01R 4/50, H01R 9/05, H01R 103/00, H01B 9/02, H01B 7/42

(54) **KONTAKTSYSTEM**

(71) Anmelder: Gebauer & Griller Kabelwerke Gesellschaft m.b.H., 1190 Wien (AT)
(72) Erfinder: Krall, Stephan, 2122 Riedenthal (AT); Veit, Stefan, 2251 Ebenthal (AT); Fleischer, Gottfried, 2170 Poysdorf (AT); Schwent, Michael, 2130 Mistelbach (AT)
(74) Vertreter: KLIMENT & HENHAPEL

(57) **Zusammenfassung**

Kontaktsystem (1) zur Verbindung eines elektrischen Leiters (3) mit einem Abnehmerkontaktelement (13) mittels eines Leiterkontaktelementes (9), das Kontaktsystem (1) wie folgt umfassend:
- das Leiterkontaktelement (9) und
- ein Kabel (2) mit
- einem sich entlang einer Mittelachse (4) des Kabels erstreckenden Kühlrohr (5) zum Transport von Kühlflüssigkeit,
- dem elektrischen Leiter (3), der das Kühlrohr (5) zumindest abschnittsweise umgibt,
- einem Kabelmantel (6), der den elektrischen Leiter (3) zumindest abschnittsweise umgibt.

Um eine effiziente Verbindung zwischen dem elektrischen Leiter und dem Abnehmerkontaktelement bei gleichzeitig guter Kühlung zu gewährleisten, ist erfindungsgemäß vorgesehen, dass das Leiterkontaktelement (9) hülsenförmig ausgebildet ist und das Kühlrohr (5) entlang eines ersten Abschnitts (5a) umgibt, wobei das Leiterkontaktelement (9) zweiteilig ausgeführt ist und eine Außenhülse (11) sowie eine von dieser zumindest abschnittsweise umgebene Innenhülse (10) aufweist,
wobei die Außenhülse (11) eine dem Kühlrohr (5) zugewandte Leiterkontaktfläche (11a) zur Kontaktierung des elektrischen Leiters (3) aufweist.

## Beschreibung

### GEBIET DER ERFINDUNG

Die vorliegende Erfindung betrifft ein Kontaktsystem zur Verbindung eines elektrischen Leiters mit einem Abnehmerkontaktelement mittels eines Leiterkontaktelementes, das Kontaktsystem wie folgt umfassend:
- das Leiterkontaktelement und
- ein Kabel mit
   o einem sich entlang einer Mittelachse des Kabels erstreckenden Kühlrohr zum Transport von Kühlflüssigkeit,
   o dem elektrischen Leiter, der das Kühlrohr zumindest abschnittsweise umgibt,
   o einem Kabelmantel, der den elektrischen Leiter zumindest abschnittsweise umgibt.

### STAND DER TECHNIK

Ein Leiter eines Kabels, durch den elektrischer Strom fließt, erzeugt Wärme - ein unvermeidbarer Effekt, der die Effizienz der Energieübertragung mindert. Diese Wärmeentwicklung, die als ohmsche Verlustleistung bezeichnet wird, entsteht durch den Widerstand des Leitermaterials und die Stärke des Stroms. Dabei wächst die Verlustleistung mit dem Quadrat des Stroms - eine Verdoppelung des Stroms führt also zu einer Vervierfachung der erzeugten Wärme.

Um eine Überhitzung zu vermeiden, sind zwei Ansätze entscheidend: Entweder wird der Stromfluss begrenzt, um die entstehende Wärme gering zu halten, oder die überschüssige Wärme wird aktiv durch Kühlmaßnahmen abgeführt. Ein sorgfältig geplantes Wärmemanagement ist somit unerlässlich, insbesondere bei Anwendungen mit hohen Strömen, um eine effiziente Energieübertragung sicherzustellen.

Um die durch Stromfluss entstehende Wärme in Leitern zu reduzieren, sind aus dem Stand der Technik Kabel mit integriertem Kühlrohr bekannt. Bei einem solchen Kabel verläuft üblicherweise zentral ein Kühlrohr, das vom Leiter umgeben wird, wodurch eine gezielte Abfuhr der erzeugten Wärme ermöglicht wird. Durch den Transport einer Kühlflüssigkeit, wie Wasser oder ein anderes wärmeleitendes Fluid, durch das Kühlrohr kann die Temperatur des Leiters effektiv reguliert werden, selbst bei hohen Strömen. Dies minimiert nicht nur die ohmschen Verluste, sondern schützt auch die Materialstruktur vor thermischen Belastungen. Solche Kabel sind besonders in Anwendungen von Bedeutung, wo sowohl Effizienz als auch Langlebigkeit essenziell sind. Insbesondere können solche Kabel für das Laden von Elektrofahrzeugen zum Einsatz kommen.

Um die aus dem Stand der Technik bekannten Kabel mit einem Abnehmerkontaktelement verbinden zu können, muss das zentrale Kühlrohr im Verbindungsbereich jedoch aus dem Kabel weggeführt werden, um den Leiter zugänglich zu machen, sodass dieser über ein Leiterkontaktelement mit dem Abnehmerkontaktelement elektrisch gekoppelt werden kann.

Die notwendige Auftrennung zwischen Kühlrohr und Leiter ist allerdings problematisch. Ohne die thermische Anbindung an das Kühlrohr werden der Leiter und auch das Leiterkontaktelement im Verbindungsbereich nicht mehr ausreichend gekühlt. Dies führt zu einem deutlichen Temperaturanstieg im Verbindungsbereich; d.h. im Vergleich zum restlichen gekühlten Kabel treten hier Verluste auf, die die Effizienz stark beeinträchtigen.

### AUFGABE DER ERFINDUNG

Es ist daher eine Aufgabe der vorliegenden Erfindung, ein Kontaktsystem zur Verbindung eines elektrischen Leiters mit einem Abnehmerkontaktelement zur Verfügung zu stellen, das die Nachteile des Stands der Technik überwindet. Insbesondere soll das Kontaktsystem eine einfache und wirtschaftliche sowie effiziente Verbindung zwischen dem elektrischen Leiter und dem Abnehmerkontaktelement gewährleisten. Gleichzeitig soll die Kühlstrecke, insbesondere im Bereich des Kontaktsystems, nicht unterbrochen sein.

### DARSTELLUNG DER ERFINDUNG

Diese Aufgabe wird bei einem Kontaktsystem zur Verbindung eines elektrischen Leiters mit einem Abnehmerkontaktelement mittels eines Leiterkontaktelementes, das Kontaktsystem wie folgt umfassend:
- das Leiterkontaktelement und
- ein Kabel mit

o einem sich entlang einer Mittelachse des Kabels erstreckenden Kühlrohr zum Transport von Kühlflüssigkeit,
o dem elektrischen Leiter, der das Kühlrohr zumindest abschnittsweise umgibt,
o einem Kabelmantel, der den elektrischen Leiter zumindest abschnittsweise umgibt,

erfindungsgemäß dadurch gelöst, dass
das Leiterkontaktelement hülsenförmig ausgebildet ist und das Kühlrohr entlang eines ersten Abschnitts umgibt,
wobei das Leiterkontaktelement zweiteilig ausgeführt ist und eine Außenhülse sowie eine von dieser zumindest abschnittsweise umgebene Innenhülse aufweist,
wobei die Außenhülse eine dem Kühlrohr zugewandte Leiterkontaktfläche zur Kontaktierung des elektrischen Leiters aufweist.

Das Kabel umfasst also das Kühlrohr, den elektrischen Leiter sowie den Kabelmantel.

Der elektrische Leiter ist aus einem elektrisch leitfähigen Material, vorzugsweise Kupfer, Aluminium oder einer zumindest eines dieser Metalle enthaltenden Legierung, gefertigt. Als elektrischer Leiter werden im Sinne der Erfindung sowohl Einzelleiter verstanden als auch aus mehreren Einzelleitern bestehende Litzen.

Das Kühlrohr ist in der Mitte des Kabels, d.h. zentral, angeordnet und ist von der Kühlflüssigkeit, wie bspw. Wasser oder ein anderes wärmeleitendes Fluid, durchströmbar, um Wärme abzuführen. Des Weiteren sei in diesem Zusammenhang erwähnt, dass der Begriff Kühlrohr im Sinne der Erfindung auch Kühlschläuche umfasst.

Um den elektrischen Leiter zu kontaktieren, ist das Leiterkontaktelement vorgesehen. Dieses ist erfindungsgemäß zweiteilig ausgeführt und umfasst die Außenhülse und die Innenhülse.

Unter Hülse wird üblicherweise ein Element verstanden, das eine, vorzugsweise zentrische, Durchgangsöffnung und einen die Durchgangsöffnung aufweisenden, vorzugsweise rotationssymmetrischen, Mantelkörper umfasst. Die Durchgangsöffnung kann dabei grundsätzlich einen beliebigen Querschnitt haben, solange die Durchführung zumindest eines Abschnitts des Kabels gewährleistet ist.

Die Innenhülse ist jene Hülse, die in einer Kontaktposition in radialer Richtung - verglichen mit der Außenhülse - näher am Kühlrohr angeordnet ist.

Die Innenhülse ist auf das Kühlrohr oder auf eine das Kühlrohr zumindest abschnittsweise umgebende Schicht oder auf ein das Kühlrohr umgebendes Element aufschiebbar, sodass die Durchgangsöffnung der Innenhülse in vorteilhafter Weise an die Geometrie des Kühlrohrs angepasst ist, beispielsweise kreisrund, elliptisch oder im Wesentlichen polygonal. Die Innenhülse kann also direkt, d.h. unmittelbar, oder indirekt, d.h. unter Zwischenlage zumindest einer Schicht oder eines Elements, am Kühlrohr anordenbar sein.

Der Mantelkörper der Innenhülse ist derart ausgebildet, dass die Innenhülse zumindest abschnittsweise in die Außenhülse einschiebbar ist. Im Allgemeinen wird die Einschiebbarkeit dadurch erreicht, dass die äußeren Abmessungen der Innenhülse kleiner oder gleich den inneren Abmessungen der Durchgangsöffnung der Außenhülse ist.

Die Außenhülse weist die Leiterkontaktfläche auf, die dem Kühlrohr zugewandt ist. Die Leiterkontaktfläche wird vorzugsweise von einer radial inneren Umfangsfläche, sprich von der Begrenzungsfläche der Durchgangsöffnung der Außenhülse, ausgebildet.

In der Kontaktposition umgibt das Leiterkontaktelement den ersten Abschnitt des Kühlrohrs und der elektrische Leiter kontaktiert die Leiterkontaktfläche der Außenhülse.

In einem Betriebszustand befinden sich Kabel und Leiterkontaktelement in der Kontaktposition und zusätzlich strömt die Kühlflüssigkeit durch das Kühlrohr.

Während die Außenhülse zumindest abschnittsweise aus einem (einer) elektrisch leitfähigen Material(-zusammensetzung) bestehen muss, kann die Innenhülse auch aus einem nicht elektrisch leitfähigen Material sein.

Die hülsenförmige Ausgestaltung des Leiterkontaktelements führt zu einer zumindest abschnittsweisen ringförmigen, vorzugsweise gleichmäßigen, Kontaktierung zwischen elektrischem Leiter und Leiterkontaktfläche der Außenhülse.

Besonders vorteilhaft beim erfindungsgemäßen Kontaktsystem ist, dass trotz elektrischer Kontaktierung zwischen Leiterkontaktelement und elektrischem Leiter aufgrund der hülsenförmigen Ausgestaltung des Leiterkontaktelementes keine Trennung zwischen dem elektrischen Leiter und dem Kühlrohr erfolgen muss, wodurch ein optimaler Wärmeübergang im Bereich der elektrischen Kontaktierung erreicht werden kann.

Beim erfindungsgemäßen Kontaktsystem kann das Kühlrohr trotz elektrischer Kontaktierung im Kabel konzentrisch gehalten werden und bleibt dementsprechend in seiner Position in der Mitte des Kabels. Das hülsenförmige Leiterkontaktelement wird auf das Kabel aufgeschoben. Auch muss der elektrische Leiter, insbesondere die Einzeldrähte des elektrischen Leiters, nicht gebogen und keinem Nullschnitt unterzogen werden, wobei als Nullschnitt üblicherweise das definierte Ablängen des elektrischen Leiters, insbesondere der Einzeldrähte, durch eine Ebene bezeichnet wird.

Der elektrische Leiter kann stoffschlüssig und/oder formschlüssig und/oder kraftschlüssig mit der Leiterkontaktfläche der Außenhülse verbunden sein. Es ist vorstellbar, dass der elektrische Leiter mit/an der Leiterkontaktfläche gecrimpt, geschweißt, gelötet, geklebt, geklemmt, gesteckt oder geklippt ist. Bevorzugt ist der elektrische Leiter an der Leiterkontaktfläche geklemmt. Besonders bevorzugt ist der elektrische Leiter mit der Leiterkontaktfläche kaltverschweißt.

Insbesondere kann das Kontaktsystem bei einem Ladekabel eines Elektrofahrzeugs, bevorzugt eines Elektroautos, zum Einsatz kommen. Konkret verbindet das Kontaktsystem mittels des Abnehmerkontaktelements das entsprechende Ladekabel mit einem Stecker. Beim Laden von Elektrofahrzeugen treten mitunter hohe Stromstärken auf, weshalb eine entsprechende Kühlung des Kontaktsystems von essentieller Bedeutung ist. Mittels des erfindungsgemäßen Kontaktsystems lassen sich Spannungen im Bereich von 400 Volt bis 1200 Volt sowie Stromstärken zwischen 200 Ampere und 3000 Ampere, bevorzugt zwischen 500 Ampere und 1500 Ampere, realisieren bzw. im Wesentlichen verlustfrei übertragen.

Um eine optimale elektrische Kontaktierung zu erreichen, ist in einer Ausführungsvariante der Erfindung vorgesehen, dass die Innenhülse eine Klemmfläche aufweist und der elektrische Leiter zwischen der Leiterkontaktfläche und der Klemmfläche gefügt ist.

Die Leiterkontaktfläche und die Klemmfläche sind in der Kontaktposition vorzugsweise miteinander korrespondierend angeordnet.

Für die Wahl der Geometrie der Leiterkontaktfläche und der Klemmfläche kann eine Vielzahl von Formen in Frage kommen, solange durch die Ausgestaltung der Flächen zumindest ein Bereich definiert wird, durch welchen beim Ineinanderschieben der Außenhülse und der Innenhülse eine auf den elektrischen Leiter wirkende Klemmkraft ausgeübt wird.

Bevorzugt ist der elektrische Leiter zwischen der Leiterkontaktfläche und der Klemmfläche geklemmt, besonders bevorzugt ist der elektrische Leiter zwischen der Leiterkontaktfläche und der Klemmfläche derart geklemmt, dass eine Kaltverschweißung zwischen dem elektrischen Leiter und der Leiterkontaktfläche erzeugt wird.

Vorzugsweise sind die Leiterkontaktfläche und die Klemmfläche konisch ausgebildet. Durch die Konizität, die sich in der Regel auf die Mittelachse des Kabels bezieht, der beiden Flächen wird erreicht, dass die Flächen durch eine axiale Verschiebung der Hülsen in die Kontaktposition eine Klemmkraft auf den elektrischen Leiter ausüben bzw. eine Druckspitze zur Quetschung/Scherung (sprich Kaltverschweißung) des elektrischen Leiters ausbilden. Die Flächen sind zueinander korrespondierend ausgebildet, zumindest wenn beide Flächen konisch ausgebildet sind.

Kabel, deren elektrische Leiter hohe Spannungen führen, bedürfen einer elektrischen Abschirmung, um eine Beeinflussung von in der Nähe befindlichen elektrischen bzw. elektronischen Komponenten zu verhindern. Gleichsam kann die Abschirmung auch zum Schutz des elektrischen Leiters gegen äußere elektrische und/oder magnetische Störeinflüsse vorgesehen sein. Zum Zwecke der Abschirmung ist üblicherweise ein Schirmgeflecht, das aus einer Vielzahl an Litzen aus einem elektrisch leitenden Material besteht, vorgesehen.

Um auch zwischen dem Schirmgeflecht des Kabels und einem Schirmkontaktelement eine zuverlässige Kontaktierung zu ermöglichen, ist in einer weiteren Ausführungsvariante der Erfindung vorgesehen, dass das Kabel zusätzlich ein den elektrischen Leiter umgebendes Schirmgeflecht umfasst und ein hülsenförmiges Schirmkontaktelement vorgesehen ist, welches das Kühlrohr entlang eines zweiten Abschnitts umgibt,
wobei das Schirmkontaktelement zweiteilig ausgeführt ist und eine Außenhülse sowie eine von dieser zumindest abschnittsweise umgebene Innenhülse aufweist,
wobei die Außenhülse eine dem Kühlrohr zugewandte Schirmkontaktfläche zur Kontaktierung des Schirmgeflechts aufweist.

Um das Schirmgeflecht zu kontaktieren, ist also das Schirmkontaktelement vorgesehen. Dieses ist zweiteilig ausgeführt und umfasst eine Außenhülse und eine Innenhülse.

Vorzugsweise befindet sich zwischen dem elektrischen Leiter und dem Schirmgeflecht eine Isolationsschicht.

Die Ausführungen, die zum Begriff "hülsenförmig" im Zusammenhang mit dem Leiterkontaktelement getätigt wurden, treffen auch auf das Schirmkontaktelement zu.

Die Innenhülse ist am elektrischen Leiter direkt, d.h**.** unmittelbar, oder indirekt, d.h. unter Zwischenlage einer Schicht oder eines Elements, vorzugsweise einer Isolationsschicht, anordenbar.

Die Außenhülse weist die Schirmkontaktfläche auf, die dem Kühlrohr zugewandt ist. Die Schirmkontaktfläche wird in der Regel von einer radial inneren Umfangsfläche, sprich von der Begrenzungsfläche der Durchgangsöffnung der Außenhülse, ausgebildet.

In der Kontaktposition umgibt das Schirmkontaktelement den zweiten Abschnitt des Kühlrohrs und das Schirmgeflecht kontaktiert die Schirmkontaktfläche der Außenhülse.

Während die Außenhülse zumindest abschnittsweise aus einem (einer) elektrisch leitfähigen Material(-zusammensetzung) bestehen muss, kann die Innenhülse auch aus einem nicht elektrisch leitfähigen Material sein.

Die hülsenförmige Ausgestaltung des Schirmkontaktelements führt zu einer zumindest abschnittsweisen ringförmigen, vorzugsweise gleichmäßigen, Kontaktierung zwischen Schirmgeflecht und Schirmkontaktfläche der Außenhülse.

In einer Strömungsrichtung der Kühlflüssigkeit, die das Kühlrohr durchfließen kann bzw. in einem Betriebszustand durchfließt, gesehen, ist die zweite Position vor der ersten Position angeordnet. Mit anderen Worten befindet sich die erste Position in Strömungsrichtung gesehen hinter der zweiten Position. D.h. in Strömungsrichtung gesehen umgibt zunächst das Schirmkontaktelement das Kühlrohr und danach umgibt das Leiterkontaktelement das Kühlrohr.

Besonders vorteilhaft ist, dass trotz elektrischer Kontaktierung zwischen Schirmkontaktelement und Schirmgeflecht keine Trennung zwischen dem Schirmgeflecht und dem Kühlrohr erfolgen muss, wodurch ein optimaler Wärmeübergang im Bereich der elektrischen Kontaktierung erreicht werden kann.

Das Schirmgeflecht kann stoffschlüssig und/oder formschlüssig und/oder kraftschlüssig mit der Schirmkontaktfläche der Außenhülse verbunden sein. Es ist vorstellbar, dass das Schirmgeflecht mit/an der Schirmkontaktfläche gecrimpt, geschweißt, gelötet, geklebt, geklemmt, gesteckt oder geklippt ist. Bevorzugt ist das Schirmgeflecht mit der Schirmkontaktfläche kaltverschweißt.

Um eine optimale elektrische Kontaktierung zu erreichen, ist in einer weiteren Ausführungsvariante der Erfindung vorgesehen, dass die Innenhülse eine Klemmfläche aufweist und das Schirmgeflecht zwischen der Schirmkontaktfläche und der Klemmfläche gefügt ist.

Die Schirmkontaktfläche und die Klemmfläche sind in der Kontaktposition vorzugsweise miteinander korrespondierend angeordnet.

Für die Wahl der Geometrie der Schirmkontaktfläche und der Klemmfläche kann eine Vielzahl von Formen in Frage kommen, solange durch die Ausgestaltung der Flächen zumindest ein Bereich definiert wird, durch welchen beim Ineinanderschieben der Außenhülse und der Innenhülse eine auf das Schirmgeflecht wirkende Klemmkraft ausgeübt wird.

Bevorzugt ist das Schirmgeflecht zwischen der Schirmkontaktfläche und der Klemmfläche geklemmt, besonders bevorzugt ist das Schirmgeflecht zwischen der Schirmkontaktfläche und der Klemmfläche derart geklemmt, dass eine Kaltverschweißung zwischen dem Schirmgeflecht und der Schirmkontaktfläche erzeugt wird.

Vorzugsweise sind die Schirmkontaktfläche und die Klemmfläche konisch ausgebildet. Durch die Konizität, die sich in der Regel auf die Mittelachse des Kabels bezieht, der beiden Flächen wird erreicht, dass die Flächen durch eine axiale Verschiebung der Hülsen in die Kontaktposition eine Klemmkraft auf das Schirmgeflecht ausüben bzw. eine Druckspitze zur Quetschung/Scherung (sprich Kaltverschweißung) des Schirmgeflechts ausbilden. Die Flächen sind zueinander korrespondierend ausgebildet, zumindest wenn beide Flächen konisch ausgebildet sind.

Um das Leiterkontaktelement vor äußeren Einflüssen zu schützen, ist in einer weiteren Ausführungsvariante der Erfindung vorgesehen, dass das Kontaktsystem ein Gehäuse umfasst, in welchem Gehäuse das Leiterkontaktelement angeordnet ist und welches Gehäuse einen Hauptkörper und eine Endkappe aufweist, wobei Hauptkörper und Endkappe kraftschlüssig und/oder formschlüssig miteinander verbunden sind.

Die kraftschlüssige und/oder formschlüssige Verbindung sorgt für eine hohe mechanische Stabilität und Belastbarkeit, wodurch das Gehäuse zuverlässig zusammenhält. Gleichzeitig ermöglicht sie eine einfache Montage und Demontage, was Wartungs- und Reparaturarbeiten erleichtert. Des Weiteren wird das Risiko von Undichtigkeiten minimiert und das Innere vor Staub, Feuchtigkeit und anderen Einflüssen geschützt.

Zudem gewährleistet die formschlüssige Ausführung eine präzise Passgenauigkeit und Ausrichtung der Bauteile.

Ein weiterer Vorteil liegt darin, dass Hauptkörper und Endkappe bei Bedarf aus unterschiedlichen Materialien gefertigt oder mit verschiedenen Verfahren hergestellt werden können, was sowohl funktionale als auch wirtschaftliche Vorteile bietet.

Damit auch das Schirmkontaktelement vor äußeren Einflüssen bestmöglich geschützt ist, ist in einer weiteren Ausführungsvariante der Erfindung vorgesehen, dass das Schirmkontaktelement im Gehäuse angeordnet ist.

In einer weiteren Ausführungsvariante der Erfindung ist vorgesehen, dass Hauptkörper und Endkappe mittels einer Schnappverbindung miteinander verbunden sind. Die Schnappverbindung ermöglicht eine schnelle und werkzeuglose Montage, was Zeit und Kosten im Produktions- und Montageprozess spart. Durch das automatische Einrasten der Verbindung entsteht eine sichere und zuverlässige Fixierung zwischen Hauptkörper und Endkappe, ohne dass zusätzliche Befestigungselemente wie Schrauben oder Klebstoffe erforderlich sind. Darüber hinaus erlaubt die Schnappverbindung eine zerstörungsfreie Demontage, was Wartung, Recycling oder Austausch erleichtert. Sie ist besonders gut für Serienfertigung geeignet und trägt durch ihre einfache Konstruktion zur Reduzierung des Bauteilgewichts und der Herstellungskosten bei.

Um das Kühlrohr auf einfache und sichere Art und Weise zu kontaktieren, ohne dieses aus dem Zentrum des Kabels herauszuführen, ist in einer weiteren Ausführungsvariante der Erfindung vorgesehen, dass das Gehäuse einen Kühlkanal aufweist und Mittel zur Anbindung des Kühlrohres an den Kühlkanal vorgesehen sind, wobei die Mittel vorzugsweise einstückig mit dem Hauptkörper ausgebildet sind.

Das Kühlrohr wird also mit dem, vorzugsweise ebenfalls mittig im Gehäuse angeordneten, Kühlkanal verbunden, sodass im Betriebszustand die im Kühlrohr strömende Kühlflüssigkeit in den Kühlkanal weiterfließt.

Die Mittel stellen die Verbindung zwischen dem Kühlrohr und dem Kühlkanal her.

Vorzugsweise sind die Mittel einstückig mit dem Hauptkörper ausgebildet, wodurch die Stabilität und Festigkeit der Mittel erhöht wird, da keine zusätzlichen Verbindungsstellen oder - elemente erforderlich sind, die potenzielle Schwachstellen darstellen können. Zudem reduziert sich der Fertigungsaufwand, da weniger Einzelteile hergestellt und montiert werden müssen, was sowohl die Produktionszeit als auch die Kosten senkt. Durch die einteilige Ausführung wird außerdem das Risiko von Montagefehlern minimiert und die Qualität sowie Reproduzierbarkeit verbessert.

Damit die Mittel eine innere Mantelfläche des Kühlrohrs kontaktieren und abdichten, ist in einer weiteren Ausführungsvariante der Erfindung vorgesehen, dass es sich bei den Mitteln zur Anbindung des Kühlrohres um die Wandung des Kühlkanals handelt, welche Wandung an ihrer dem Kühlrohr zugewandten Stirnfläche als ringförmiger, in das Kühlrohr einschiebbarer Dorn oder Zapfen ausgebildet ist.

Der Dorn oder Zapfen wird also zumindest abschnittsweise in das Kühlrohr eingeführt und stellt eine Verbindung zwischen dem Kühlrohr und dem Kühlkanal her. Der Durchmesser des Dorns oder des Zapfens ist zumindest abschnittsweise so gewählt, dass der Dorn oder der Zapfen sich in das Kühlrohr einführen lässt und gleichzeitig eine Abdichtung erfolgt. Um eine optimale Abdichtung zu erhalten kann der Dorn oder der Zapfen hülsenförmig ausgestaltet sein.

In einer weiteren Ausführungsvariante der Erfindung ist vorgesehen, dass eine dem Kühlkanal abgewandte Oberfläche des Dorns oder Zapfens von einem Anbindungsaufnahmevolumen im Gehäuse zur Aufnahme einer zumindest teilweise abgelösten Kühlrohrwandung zumindest abschnittsweise umgeben ist.

Beim Einschieben des Dorns oder des Zapfens in das Kühlrohr wird endseitig eine Wandung des Kühlrohrs aufgeweitet. Um Platz für diese Aufweitung zu haben, ist das Anbindungsaufnahmevolumen im Gehäuse vorgesehen.

Es ist auch vorstellbar, dass sich die Kühlrohrwandung beim Aufschieben auf den Dorn oder den Zapfen abschnittsweise abschält und in weiterer Folge im Anbindungsaufnahmevolumen aufgenommen ist.

Es ist vorstellbar, dass der Dorn oder der Zapfen auf einer äußeren, dem Kühlrohr zugewandten und dem Kühlkanal abgewandten Oberfläche ein Zapfenprofil aufweist. Dies ist einerseits vorteilhaft, weil das Zapfenprofil abdichtet und einen Austritt des Fluids verhindert, und andererseits, weil es ein Verrutschen bzw. Abrutschen des zumindest abschnittsweise im Kühlrohr angeordneten Dorns oder Zapfens verhindert.

Um im Betriebszustand die Kühlflüssigkeit aus dem Gehäuse, insbesondere aus dem Kühlkanal, ausleiten zu können, ist in einer weiteren Ausführungsvariante der Erfindung vorgesehen, dass das Gehäuse Mittel zur Anbindung einer Kühlflüssigkeitsausgangsleitung aufweist, wobei es sich bei den Mitteln vorzugsweise um eine Aufnahme für ein separates Anschlussrohr handelt.

Die Mittel verbinden also das Gehäuse, insbesondere den Kühlkanal, mit der Kühlflüssigkeitsausgangsleitung, wobei die Mittel derart ausgestaltet sind, dass sie eine einfache und dichte Verbindung gewährleisten.

Es ist vorstellbar, dass die Aufnahme und das separate Anschlussrohr formfallend gefertigt sind. Für die Abdichtung kann ein Dichtelement, beispielsweise ein O-Ring, vorgesehen sein.

Um den elektrischen Strom sicher und zuverlässig vom Leiterkontaktelement abgreifen zu können, ist in einer weiteren Ausführungsvariante der Erfindung vorgesehen, dass das Kontaktsystem das erste Abnehmerkontaktelement umfasst, welches die Außenhülse des Leiterkontaktelements kontaktiert.

Das erste Abnehmerkontaktelement ist derart ausgebildet, dass es für eine stabile Kontaktkraft sorgt, wodurch elektrischer Strom zuverlässig übertragen und Kontaktunterbrechungen vermieden werden.

Für eine einfache und zuverlässige Übertragen des elektrischen Stroms ist in einer weiteren Ausführungsvariante der Erfindung vorgesehen,
1. dass das Kontaktsystem ein erstes Aufnahmevolumen zur abschnittsweisen Aufnahme des ersten Abnehmerkontaktelements aufweist, wobei das erste Aufnahmevolumen zumindest abschnittsweise zwischen der Außenhülse und dem Gehäuse ausgebildet ist, oder
2. dass das Gehäuse eine erste Ausnehmung zur abschnittsweisen Aufnahme des ersten Abnehmerkontaktelements aufweist, oder
3. dass die Außenhülse einen Fortsatz umfasst, der eine Richtungskomponente aufweist, die parallel zur Mittelachse ist, und der entlang der Mittelachse gesehen über die Innenhülse übersteht, wobei das Abnehmerkontaktelement den Fortsatz, vorzugsweise an einer dem Kühlrohr zumindest abschnittsweise zugewandten Abnehmerkontaktfläche, kontaktiert.

Die 1. Variante bietet den Vorteil, dass das Abnehmerkontaktelement sicher und positionsgenau fixiert werden kann, was eine zuverlässige elektrische Verbindung gewährleistet. Durch die zumindest abschnittsweise Aufnahme wird zudem eine kontrollierte Führung und Stabilisierung des Kontaktelements ermöglicht, wodurch mechanische Belastungen reduziert und Kontaktunterbrechungen vermieden werden. Gleichzeitig erleichtert die 1. Variante die Montage, da das Abnehmerkontaktelement gezielt und ohne Spiel in das erste Aufnahmevolumen eingeführt werden kann. Das Abnehmerkontaktelement kann die Außenhülse an einer dem Kühlrohr abgewandten Abnehmerkontaktfläche kontaktieren.

Der Vorteil der 2. Variante besteht darin, dass das Abnehmerkontaktelement formschlüssig und präzise im Gehäuse, nämlich in der Ausnehmung, positioniert werden kann, was die mechanische Stabilität erhöht und eine zuverlässige elektrische Kontaktierung sicherstellt. Des Weiteren kann das Gehäuse kompakter gebaut werden, da innerhalb des Gehäuses kein Aufnahmevolumen für das Abnehmerkontaktelement vorgesehen werden muss. Auch bei dieser Variante kann das Abnehmerkontaktelement die Außenhülse an einer dem Kühlrohr abgewandten Abnehmerkontaktfläche kontaktieren.

Die 3. Variante ermöglicht eine gezielte Führung und definierte Kontaktierung des Abnehmerkontaktelements. Durch das axiale Überstehen des Fortsatzes über die Innenhülse wird eine Abnehmerkontaktfläche geschaffen, die eine stabile Stromübertragung gewährleistet. Außerdem trägt der Fortsatz zur mechanischen Stabilität bei. Der Fortsatz kann entweder vollumfänglich von einem Basiskörper der Außenhülse abragen oder abschnittsweise.

Bei allen drei Varianten kann der Hauptkörper des Gehäuses auf dem der Endkappe gegenüberliegenden Ende eine Öffnung aufweisen, durch die das Abnehmerkontaktelement zumindest in den Hauptkörper oder in die erste Ausnehmung des Gehäuses eingeschoben werden kann.

In einer weiteren Ausführungsvariante der Erfindung ist vorgesehen, dass sich das erste Abnehmerkontaktelement entlang der Mittelachse erstreckt und einen Basisabschnitt und zumindest einen vom Basisabschnitt abragenden Kontaktabschnitt zur Kontaktierung der Außenhülse aufweist.

Die axiale Ausrichtung entlang der Mittelachse sorgt für eine kompakte und symmetrische Bauweise des Abnehmerkontaktelements, die eine einfache Integration in das Kontaktsystem ermöglicht. Der Basisabschnitt gewährleistet eine stabile mechanische Basis, während der abragende Kontaktabschnitt eine gezielte und zuverlässige elektrische Kontaktierung der Außenhülse sicherstellt.

Es ist vorstellbar, dass der Hauptkörper des Gehäuses auf dem der Endkappe gegenüberliegenden Ende eine Öffnung aufweist, durch die das Abnehmerkontaktelement, insbesondere der Kontaktabschnitt, zumindest in den Hauptkörper eingeschoben werden kann.

Selbstverständlich ist nicht ausgeschlossen, dass das erste Abnehmerkontaktelement mehr als einen Kontaktabschnitt aufweist, wobei jeder Kontaktabschnitt vom Basisabschnitt abragt. Es ist vorstellbar, dass die Kontaktabschnitte gleichmäßig entlang des Umfangs des Basisabschnitts verteilt sind.

Um das Schirmkontaktelement optimal kontaktieren zu können, ist in einer weiteren Ausführungsvariante der Erfindung vorgesehen, dass das Kontaktsystem ein zweites Abnehmerkontaktelement umfasst, welches die Außenhülse des Schirmkontaktelements, vorzugsweise an einer dem Kühlrohr zumindest abschnittsweise abgewandten Abnehmerkontaktfläche, kontaktiert.

Auch das zweite Abnehmerkontaktelement ist derart ausgebildet, dass es für eine stabile Kontaktkraft sorgt, wodurch eine zuverlässige Übertragung gewährleistet wird und Kontaktunterbrechnungen vermieden werden.

Für eine einfache und zuverlässige Kontaktierung des Schirmkontaktelements ist in einer weiteren Ausführungsvariante der Erfindung vorgesehen, dass das Gehäuse eine zweite Ausnehmung zur abschnittsweisen Aufnahme des zweiten Abnehmerkontaktelements aufweist.

Das zweite Abnehmerkontaktelement kann also formschlüssig und präzise im Gehäuse, nämlich in der zweiten Ausnehmung, positioniert werden, was die mechanische Stabilität erhöht und eine zuverlässige Kontaktierung des Schirmkontaktelements sicherstellt. Des Weiteren kann das Gehäuse kompakter gebaut werden, da innerhalb des Gehäuses kein Aufnahmevolumen für das zweite Abnehmerkontaktelement vorgesehen werden muss.

In einer weiteren Ausführungsvariante der Erfindung ist vorgesehen, dass sich das zweite Abnehmerkontaktelement entlang der Mittelachse erstreckt und einen Basisabschnitt und zumindest einen vom Basisabschnitt abragenden Kontaktabschnitt zur Kontaktierung der Außenhülse aufweist.

Die axiale Ausrichtung entlang der Mittelachse sorgt für eine kompakte und symmetrische Bauweise des zweiten Abnehmerkontaktelements, die eine einfache Integration in das Kontaktsystem ermöglicht. Der Basisabschnitt gewährleistet eine stabile mechanische Basis, während der abragende Kontaktabschnitt eine gezielte und zuverlässige Kontaktierung des Schirmkontaktelements, insbesondere der Außenhülse, sicherstellt.

Es ist vorstellbar, dass der Hauptkörper des Gehäuses auf dem der Endkappe gegenüberliegenden Ende eine zweite Öffnung aufweist, durch die das zweite Abnehmerkontaktelement, insbesondere der Kontaktabschnitt, zumindest in den Hauptkörper eingeschoben werden kann. Ebenso ist es vorstellbar, dass der Hauptkörper auf dem der Endkappe gegenüberliegenden Ende eine gemeinsame Öffnung aufweist, durch die das erste und das zweite Abnehmerkontaktelement, insbesondere die Kontaktabschnitte, eingeschoben werden können.

Selbstverständlich ist nicht ausgeschlossen, dass das zweite Abnehmerkontaktelement mehr als einen Kontaktabschnitt aufweist, wobei jeder Kontaktabschnitt vom Basisabschnitt abragt. Es ist vorstellbar, dass die Kontaktabschnitte gleichmäßig entlang des Umfangs des Basisabschnitts verteilt sind.

Damit das erste und/oder das zweite Abnehmerkontaktelement besonders stabil ist und gleichzeitig gute Kontaktierungseigenschaften aufweisen, ist in einer weiteren Ausführungsvariante der Erfindung vorgesehen, dass es sich beim Basisabschnitt um ein Zylinderrohr handelt und der Kontaktabschnitt entlang der Mittelachse gesehen einen verlängerten Abschnitt des Zylinderohrs ausbildet.

Im Falle von mehr als einem Kontaktabschnitt, bildet jeder Kontaktabschnitt einen verlängerten Abschnitt des Zylinderrohrs aus.

Nachfolgend wird die Herstellung / Montage des erfindungsgemäßen Kontaktsystems erläutert, nämlich ein Verfahren zur Kontaktierung eines ein Kühlrohr zumindest abschnittsweise umgebenden elektrischen Leiters eines Kabels mit einem Abnehmerkontaktelement mittels eines Leiterkontaktelements,
wobei das Leiterkontaktelement
   - eine Außenhülse mit einer dem Kühlrohr zugewandten Leiterkontaktfläche und
   - eine Innenhülse umfasst,
wobei folgende Schritte durchgeführt werden:
   - gegebenenfalls Entfernen eines Abschnitts eines den elektrischen Leiter zumindest abschnittsweise umgebenden Kabelmantels und/oder eines Abschnitts zumindest einer weiteren den elektrischen Leiter zumindest abschnittsweise umgebenden Schicht im Bereich eines offenen Endes des Kabels;
   - Aufschieben von Außenhülse und Innenhülse des Leiterkontaktelements auf das Kabel;
   - Platzieren der Innenhülse zwischen elektrischem Leiter und Kühlrohr;
   - Verschieben der Außenhülse in Richtung der Innenhülse derart, dass die Leiterkontaktfläche der Außenhülse den elektrischen Leiter kontaktiert.

Vorzugsweise wird der elektrische Leiter zwischen der Außenhülse und der Innenhülse festgeklemmt. Besonders bevorzugt tritt eine Kaltverschweißung auf.

Gegebenenfalls wird das Kabel zunächst abgelängt und im Bereich des dadurch entstehenden offenen Endes des Kabels der elektrische Leiter freigelegt, in welchem Bereich die Kontaktierung mit dem Leiterkontaktelement hergestellt werden soll.

Sämtliche Vorteile, die weiter oben im Zusammenhang mit dem Kontaktsystem erörtert wurden, können auch auf das Verfahren umgelegt werden.

In einer Ausführungsvariante des Verfahrens ist vorgesehen, dass das Kabel ein den elektrischen Leiter umgebendes Schirmgeflecht umfasst und ein Schirmkontaktelement vorgesehen ist, das eine Außenhülse mit einer dem Kühlrohr zugewandten Schirmkontaktfläche und eine Innenhülse umfasst, wobei vor dem Verfahrensschritt
- gegebenenfalls Entfernen eines Abschnitts eines den elektrischen Leiter zumindest abschnittsweise umgebenden Kabelmantels und/oder eines Abschnitts zumindest einer weiteren den elektrischen Leiter zumindest abschnittsweise umgebenden Schicht im Bereich eines offenen Endes des Kabels; folgende Schritte durchgeführt werden:
- gegebenenfalls Entfernen eines Abschnitts des das Schirmgeflecht umgebenden Kabelmantels und/oder eines Abschnitts zumindest einer weiteren das Schirmgeflecht zumindest abschnittsweise umgebenden Schicht im Bereich des offenen Endes des Kabels;
- Aufschieben von Außenhülse und Innenhülse des Schirmkontaktelements auf das Kabel;
- Platzieren der Innenhülse zwischen Schirmgeflecht und elektrischem Leiter oder zwischen Schirmgeflecht und zumindest einer weiteren den elektrischen Leiter umgebenden Schicht;
- Verschieben der Außenhülse in Richtung der Innenhülse derart, dass die Schirmkontaktfläche der Außenhülse das Schirmgeflecht kontaktiert.

Vorzugsweise wird das Schirmgeflecht zwischen der Außenhülse und der Innenhülse des Schirmkontaktelements festgeklemmt. Besonders bevorzugt tritt eine Kaltverschweißung auf.

Auch an dieser Stelle wird auf die im Zusammenhang mit dem Kontaktsystem diskutierten Vorteile verwiesen.

In einer weiteren Ausführungsvariante des Verfahrens ist vorgesehen, dass das Kontaktsystem ein Gehäuse umfassend einen Hauptkörper und eine Endkappe umfasst, wobei folgende Schritte durchgeführt werden:
- vor dem Aufschieben von Außenhülse und Innenhülse des Schirmkontaktelements zur Kontaktierung des Schirmgeflechts und/oder vor dem Aufschieben von Außenhülse und Innenhülse des Leiterkontaktelements zur Kontaktierung des elektrischen Leiters wird die Endkappe auf das Kabel aufgeschoben;
- nach dem Verschieben von Außenhülse und Innenhülse des Leiterkontaktelements zur Kontaktierung des elektrischen Leiters wird der Hauptkörper auf das Kabel aufgeschoben;
- Verbinden der Endkappe und des Hauptkörpers.

Hinsichtlich der Vorteile wird auf die obigen Ausführungen im Zusammenhang mit dem Kontaktsystem verwiesen.

In einer weiteren Ausführungsvariante des Verfahrens ist vorgesehen, dass das Kontaktsystem ein erstes und/oder ein zweites Abnehmerkontaktelement umfasst, wobei folgende Schritte durchgeführt werden:
- nach dem Verbinden der Endkappe und des Hauptkörpers des Gehäuses
- wird das erste Abnehmerkontaktelement in das Gehäuse derart eingeführt, dass es zu einer Kontaktierung der Außenhülse des Leiterkontaktelements kommt, und/oder
- wird das zweite Abnehmerkontaktelement in das Gehäuse derart eingeführt, dass es zu einer Kontaktierung der Außenhülse des Schirmkontaktelements kommt.

Auch an dieser Stelle wird auf die im Zusammenhang mit dem Kontaktsystem diskutierten Vorteile verwiesen.

### KURZE BESCHREIBUNG DER FIGUREN

Die Erfindung wird nun anhand von Ausführungsbeispielen näher erläutert. Die Zeichnungen sind beispielhaft und sollen den Erfindungsgedanken zwar darlegen, ihn aber keinesfalls einengen oder gar abschließend wiedergeben.

Dabei zeigt:
- Fig. 1: eine schematische axonometrische Ansicht eines ersten Ausführungsbeispiels eines erfindungsgemäßen Kontaktsystems;
- Fig. 2: eine schematische Seitenansicht des ersten Ausführungsbeispiels;
- Fig. 3: eine schematische Schnittansicht gemäß der in Fig. 2 eingezeichneten Schnittebene A:A;
- Fig. 4: eine schematische axonometrische Ansicht eines zweiten Ausführungsbeispiels des Kontaktsystems;
- Fig. 5: eine schematische Seitenansicht des zweiten Ausführungsbeispiels;
- Fig. 6: eine schematische Schnittansicht gemäß der in Fig. 5 eingezeichneten Schnittebene B:B;
- Fig. 7: eine schematische axonometrische Ansicht eines dritten Ausführungsbeispiels des Kontaktsystems;
- Fig. 8: eine schematische Seitenansicht des dritten Ausführungsbeispiels;
- Fig. 9: eine schematische Schnittansicht gemäß der in Fig. 8 eingezeichneten Schnittebene C:C;
- Fig. 10: eine schematische Schnittansicht, die gemäß der in Fig. 8 eingezeichneten Schnittebene C:C um 90° verdreht ist;
- Fig. 11: eine schematische axonometrische Explosionsansicht des dritten Ausführungsbeispiels;
- Fig. 12: eine schematische seitliche Explosionsansicht des dritten Ausführungsbeispiels;
- Fig. 13: eine schematische Schnittansicht gemäß der in Fig. 12 eingezeichneten Schnittebene D:D;
- Fig. 14: eine schematische seitliche Explosionsansicht des dritten Ausführungsbeispiels (die gegenüber der in Fig. 12 dargestellten seitlichen Explosionsansicht um 90° verdreht ist);
- Fig. 15: eine schematische Schnittansicht gemäß der in Fig. 14 eingezeichneten Schnittebene E:E;
- Fig. 16: eine schematische axonometrische Ansicht eines vierten Ausführungsbeispiels des Kontaktsystems;
- Fig. 17: eine schematische Seitenansicht des vierten Ausführungsbeispiels;
- Fig. 18: eine schematische Schnittansicht gemäß der in Fig. 17 eingezeichneten Schnittebene F:F;
- Fig. 19: eine schematische Seitenansicht des vierten Ausführungsbeispiels die gegenüber der in Fig. 17 dargestellten Seitenansicht um 90° verdreht ist);
- Fig. 20: eine schematische Schnittansicht gemäß der in Fig. 19 eingezeichneten Schnittebene G:G;
- Fig. 21: eine schematische axonometrische Explosionsansicht des vierten Ausführungsbeispiels;
- Fig. 22: eine schematische seitliche Explosionsansicht des vierten Ausführungsbeispiels;
- Fig. 23: eine schematische Schnittansicht gemäß der in Fig. 22 eingezeichneten Schnittebene H:H;
- Fig. 24: eine schematische seitliche Explosionsansicht des vierten Ausführungsbeispiels (die gegenüber der in Fig. 22 dargestellten seitlichen Explosionsansicht um 90° verdreht ist);
- Fig. 25: eine schematische Schnittansicht gemäß der in Fig. 24 eingezeichneten Schnittebene I:I;
- Fig. 26: eine schematische axonometrische Ansicht eines fünften Ausführungsbeispiels des Kontaktsystems;
- Fig. 27: eine schematische Seitenansicht des fünften Ausführungsbeispiels;
- Fig. 28: eine schematische Schnittansicht gemäß der in Fig. 27 eingezeichneten Schnittebene J:J;
- Fig. 29: eine schematische Schnittansicht, die gemäß der in Fig. 27 eingezeichneten Schnittebene J:J um 90° verdreht ist;
- Fig. 30: eine schematische axonometrische Explosionsansicht des fünften Ausführungsbeispiels;
- Fig. 31: eine schematische seitliche Explosionsansicht des fünften Ausführungsbeispiels;
- Fig. 32: eine schematische Schnittansicht gemäß der in Fig. 31 eingezeichneten Schnittebene K:K;
- Fig. 33: eine schematische seitliche Explosionsansicht des fünften Ausführungsbeispiels (die gegenüber der in Fig. 31 dargestellten seitlichen Explosionsansicht um 90° verdreht ist);
- Fig. 34: eine schematische Schnittansicht gemäß der in Fig. 33 eingezeichneten Schnittebene L:L;
- Fig. 35: eine schematische axonometrische Ansicht eines sechsten Ausführungsbeispiels des Kontaktsystems;
- Fig. 36: eine schematische Seitenansicht des sechsten Ausführungsbeispiels;
- Fig. 37: eine schematische Schnittansicht gemäß der in Fig. 36 eingezeichneten Schnittebene M:M;
- Fig. 38: eine schematische Seitenansicht des sechsten Ausführungsbeispiels (die gegenüber der in Fig. 36 dargestellten Seitenansicht um 90° verdreht ist);
- Fig. 39: eine schematische Schnittansicht gemäß der in Fig. 38 eingezeichneten Schnittebene N:N;
- Fig. 40: eine schematische axonometrische Explosionsansicht des sechsten Ausführungsbeispiels;
- Fig. 41: eine schematische seitliche Explosionsansicht des sechsten Ausführungsbeispiels;
- Fig. 42: eine schematische Schnittansicht gemäß der in Fig. 41 eingezeichneten Schnittebene O:O;
- Fig. 43: eine schematische seitliche Explosionsansicht des sechsten Ausführungsbeispiels (die gegenüber der in Fig. 41 dargestellten seitlichen Explosionsansicht um 90° verdreht ist);
- Fig. 44: eine schematische Schnittansicht gemäß der in Fig. 43 eingezeichneten Schnittebene P:P.

### WEGE ZUR AUSFÜHRUNG DER ERFINDUNG

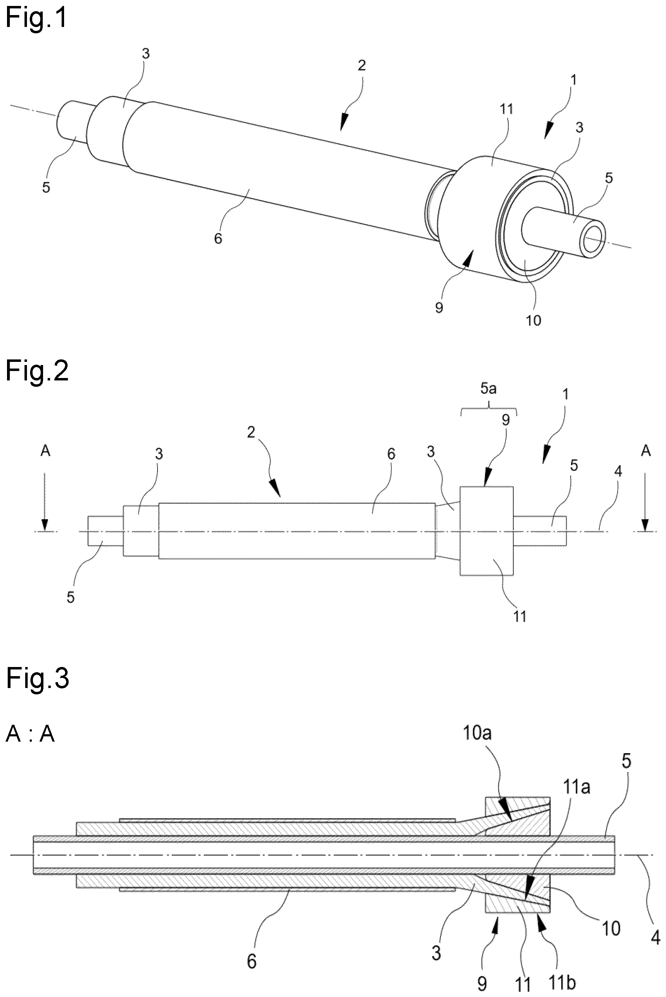

In **Fig. 1** ist eine schematische axonometrische Ansicht eines ersten Ausführungsbeispiels eines erfindungsgemäßen Kontaktsystems 1 dargestellt. Das Kontaktsystem 1 umfasst einerseits ein Leiterkontaktelement 9 und andererseits ein Kabel 2.

Das Kabel 2 weist ein zentrales Kühlrohr 5, das sich entlang einer Mittelachse 4 des Kabels 2 erstreckt, einen das Kühlrohr 5 umgebenden elektrischen Leiter 3 und einen den elektrischen Leiter 3 umgebenden Kabelmantel 6 auf.

Das Leiterkontaktelement 9 dient der Kontaktierung des elektrischen Leiters 3 und weist eine Außenhülse 11 sowie eine von der Außenhülse 11 umgebene Innenhülse 10 auf.

Aus **Fig. 2****,** die eine schematische Seitenansicht des ersten Ausführungsbeispiels zeigt, ist ersichtlich, dass das Leiterkontaktelement 9 das Kühlrohr 5 entlang eines ersten Abschnitts 5a umgibt.

Aus der in **Fig. 3** gezeigten schematischen Schnittansicht gemäß der in Fig. 2 eingezeichneten Schnittebene A:A ist ersichtlich, dass die Außenhülse 11 eine dem Kühlrohr 5 zugewandte Leiterkontaktfläche 11a aufweist. Des Weiteren weist die Innenhülse 10 eine Klemmfläche 10a auf.

Die Leiterkontaktfläche 11a und die Klemmfläche 10a sind konisch und dementsprechend zueinander korrespondierend ausgebildet, wobei der elektrische Leiter 3 zwischen der Leiterkontaktfläche 11a und der Klemmfläche 10a derart geklemmt ist, dass er die Leiterkontaktfläche 11a elektrisch kontaktiert.

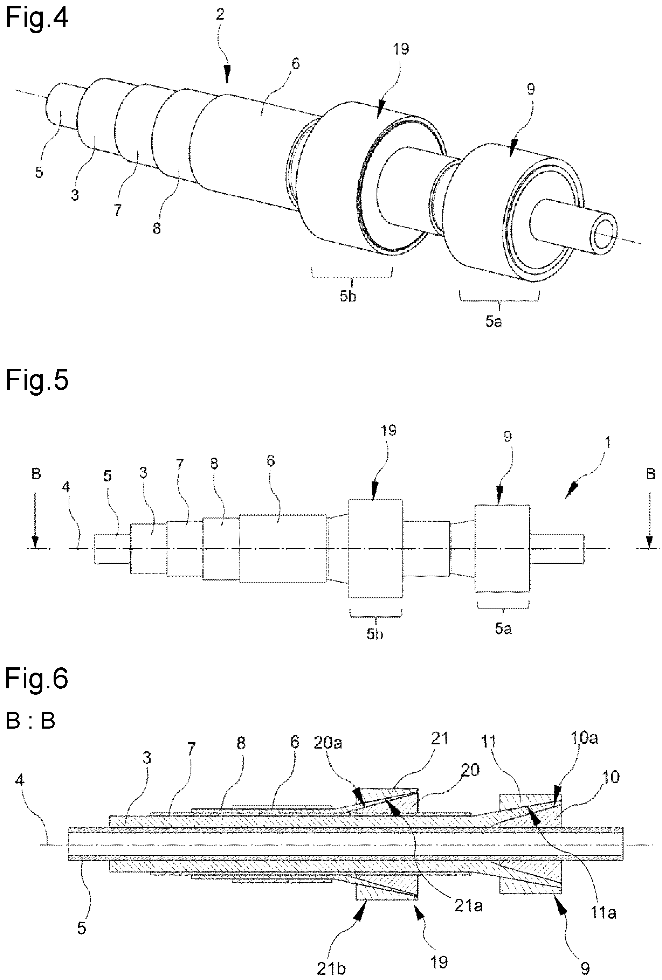

In **Fig. 4** ist eine schematische axonometrische Ansicht eines zweiten Ausführungsbeispiels des Kontaktsystems 1 dargestellt. Im zweiten Ausführungsbeispiel umfasst das Kabel 2 zusätzlich ein den elektrischen Leiter 3 umgebendes Schirmgeflecht 8 sowie eine zwischen dem elektrischen Leiter 3 und dem Schirmgeflecht 8 angeordnete Isolationsschicht 7. Zur Kontaktierung des Schirmgeflechts 8 ist ein Schirmkontaktelement 19 vorgesehen, das ebenso wie das Leiterkontaktelement 9 eine Außenhülse 21 sowie eine von der Außenhülse 21 umgebene Innenhülse 20 aufweist.

Es ist ersichtlich, dass zur Herstellung der Kontaktierungen zunächst das Schirmkontaktelement 19 auf das Kabel 2 aufgeschoben werden muss und anschließend das Leiterkontaktelement 9. Das Schirmkontaktelement 19 umgibt das Kühlrohr 5 entlang eines zweiten Abschnitts 5b, während das Leiterkontaktelement 9 das Kühlrohr entlang des ersten Abschnitts 5a umgibt, wobei der erste Abschnitt 5a entlang einer Strömungsrichtung einer Kühlflüssigkeit gesehen hinter dem zweiten Abschnitt 5b liegt. Dies zeigt auch **Fig. 5****,** die eine Seitenansicht des zweiten Ausführungsbeispiels darstellt.

Aus der in **Fig. 6** gezeigten schematischen Schnittansicht gemäß der in Fig. 5 eingezeichneten Schnittebene B:B ist ersichtlich, dass auch die Außenhülse 21 eine dem Kühlrohr 5 zugewandte Schirmkontaktfläche 21a aufweist. Des Weiteren weist die Innenhülse 20 eine Klemmfläche 20a auf.

Die Schirmkontaktfläche 21a und die Klemmfläche 20a sind ebenfalls konisch und dementsprechend zueinander korrespondierend ausgebildet, wobei das Schirmgeflecht 8 zwischen der Schirmkontaktfläche 21a und der Klemmfläche 20a derart geklemmt ist, dass es die Schirmkontaktfläche 11a kontaktiert.

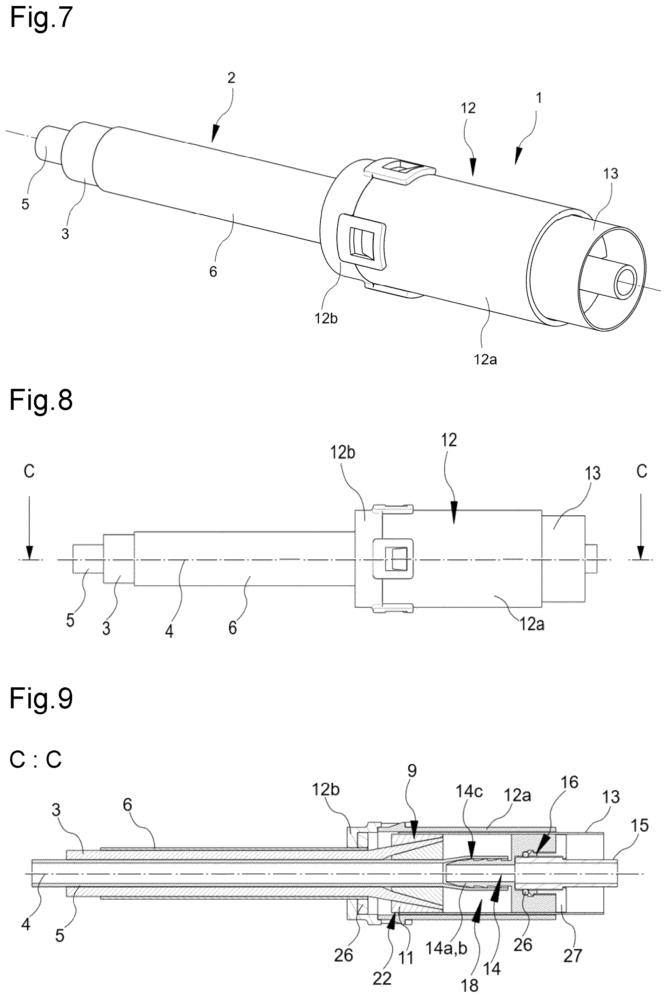

**Fig. 7** zeigt eine schematische axonometrische Ansicht eines dritten Ausführungsbeispiels des Kontaktsystems 1, welches dritte Ausführungsbeispiel bis auf folgende Unterschiede im Wesentlichen dem ersten Ausführungsbeispiel entspricht:
- Das Kontaktsystem 1 umfasst im dritten Ausführungsbeispiel ein Gehäuse 12, das einen Hauptkörper 12a und eine Endkappe 12b aufweist, die mittels einer Schnappverbindung miteinander verbunden sind. Im Gehäuse 12 ist das Leiterkontaktelement 9 angeordnet. Zur Abdichtung ist innerhalb der Endkappe 12 ein Dichtring 26 angeordnet, der im dritten Ausführungsbeispiel am Kabelmantel 6 angeordnet ist.
- Des Weiteren umfasst das Kontaktelement 1 ein erstes Abnehmerkontaktelement 13 zur Kontaktierung der Außenhülse 11 des Leiterkontaktelements 9. Aus der in **Fig. 9** gezeigten schematischen Schnittansicht gemäß der in **Fig. 8** (schematische Seitenansicht des dritten Ausführungsbeispiels) eingezeichneten Schnittebene C:C ist ersichtlich, dass das Kontaktsystem 1 ein erstes Aufnahmevolumen 22 aufweist, das zwischen der Außenhülse 11 des Leiterkontaktelements 9 und dem Gehäuse 12, insbesondere dem Hauptkörper 12a, ausgebildet ist. Zur Kontaktierung der Außenhülse 11 wird das erste Abnehmerkontaktelement 13 über eine Öffnung des Hauptkörpers 12a, die an jenem Ende des Hauptkörpers 12a ausgebildet ist, das dem Ende, an dem der Hauptkörper 12a mit der Endkappe 12b verbunden ist, gegenüberliegt, in das Aufnahmevolumen 22 eingeführt.
- Außerdem ist in Fig. 9 erkennbar, dass das Gehäuse 12, insbesondere der Hauptkörper 12a, einen Kühlkanal 14 und Mittel 14a zur Anbindung des Kühlrohrs 5 an den Kühlkanal 14 aufweist, wobei die Mittel 14a einstückig mit dem restlichen Hauptkörper 12a ausgebildet sind. Im dritten Ausführungsbeispiel handelt es sich bei den Mitteln 14 um die als ringförmiger Zapfen 14b ausgebildete Wandung des Kühlkanals 14. Der Zapfen 14b ist in das Kühlrohr 5 eingeführt und weist auf seiner äußeren Oberfläche 14c ein Zapfenprofil auf, das einerseits abdichtet und einen Austritt der Kühlflüssigkeit verhindert und andererseits ein Verrutschen des Zapfens 14b im Kühlrohr 5 verhindert. Die Oberfläche 14c des Zapfens 14b ist von einem Anbindungsaufnahmevolumen 18 umgeben, das der Aufnahme einer durch das Einschieben des Zapfens 14b abgelösten Kühlrohrwandung 5c dient.
- Außerdem umfasst das Gehäuse 12 Mittel 16 zur Anbindung einer Kühlflüssigkeitsausgangsleitung 15. Bei den Mitteln 16 handelt es sich im dritten Ausführungsbeispiel um eine Aufnahme für ein separates Anschlussrohr, wobei die Aufnahme und das Anschlussrohr formfallend gefertigt sind. Zur Abdichtung ist ein Dichtring 26 vorgesehen. Damit das Anschlussrohr nicht verrutscht, insbesondere in axialer Richtung, ist außerdem ein Konterelement 27 vorgesehen.

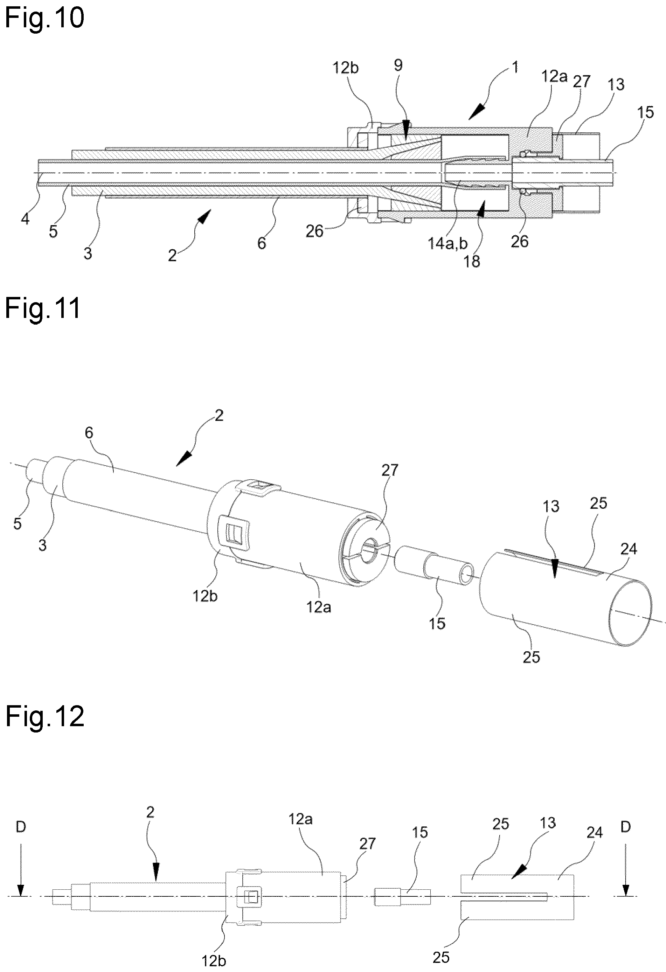

**Fig. 10** zeigt eine schematische Schnittansicht des dritten Ausführungsbeispiels, die gemäß der in Fig. 8 eingezeichneten Schnittebene C:C um 90° verdreht ist. D.h. die in Fig. 10 dargestellte Schnittebene ist in Fig. 8 parallel zur Sichtebene. Aus Fig. 10 ist besonders deutlich ersichtlich, dass die Mittel 14a einstückig mit dem restlichen Hauptkörper 12a ausgebildet sind.

Eine schematische axonometrische Explosionsansicht des dritten Ausführungsbeispiels ist in **Fig. 11** gezeigt. Aus dieser Ansicht ist ersichtlich, dass das Konterelement 27 abschnittsweise einen Spalt aufweist, um dieses abschnittsweise komprimieren und in die Aufnahme einführen zu können. Des Weiteren ist aus Fig. 11 ersichtlich, dass das erste Abnehmerkontaktelement 13 einen zylinderrohrförmigen Basisabschnitt 24 umfasst sowie zwei vom Basisabschnitt 24 abragende Kontaktabschnitte 25.

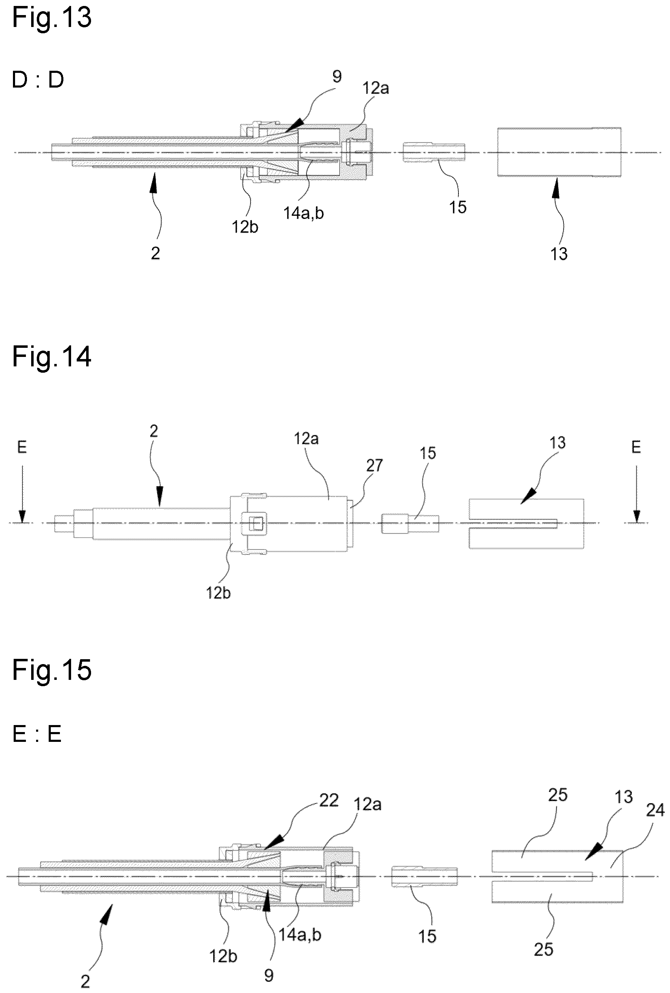

**Fig. 12** stellt eine schematische seitliche Explosionsansicht des dritten Ausführungsbeispiels dar, während **Fig. 13** eine schematische Schnittansicht gemäß der in Fig. 12 eingezeichneten Schnittebene D:D zeigt.

In **Fig. 14** ist eine schematische seitliche Explosionsansicht des dritten Ausführungsbeispiels (die gegenüber der in Fig. 12 dargestellten seitlichen Explosionsansicht um 90° verdreht ist); **Fig. 15** stellt eine schematische Schnittansicht gemäß der in Fig. 14 eingezeichneten Schnittebene E:E dar, wobei Fig. 15 das erste Aufnahmevolumen 22 besonders deutlich zeigt.

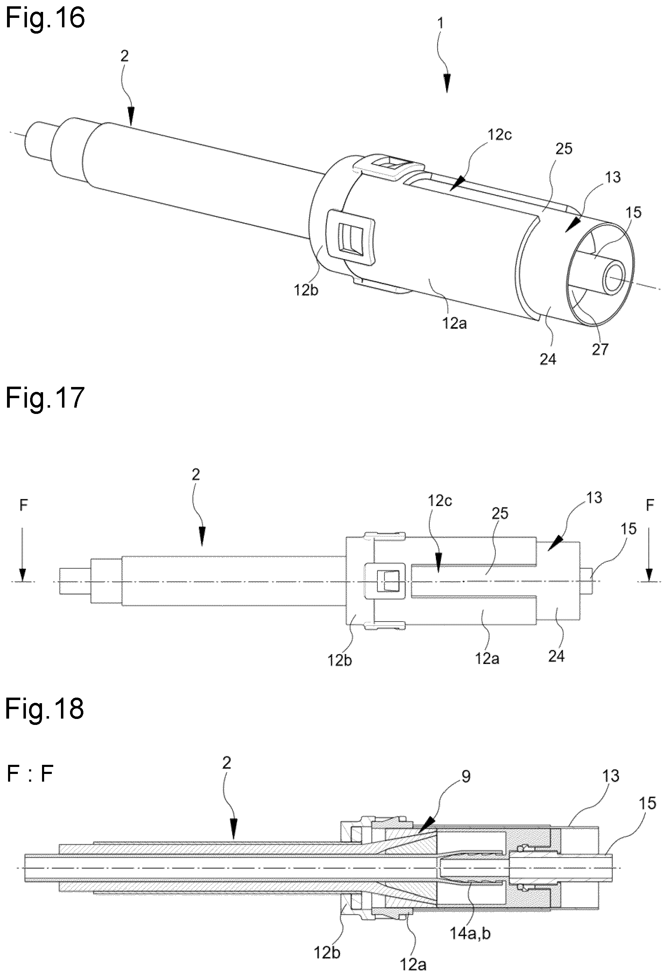

Eine schematische axonometrische Ansicht eines vierten Ausführungsbeispiels des Kontaktsystems 1 wird in **Fig. 16** gezeigt, wobei das vierte Ausführungsbeispiel bis auf folgende Unterschiede im Wesentlichen dem dritten Ausführungsbeispiel entspricht:
- Im vierten Ausführungsbeispiel existiert kein erstes Aufnahmevolumen 22, sondern weist das Gehäuse 12 zwei erste Ausnehmungen 12c auf, in welche das erste Abnehmerkontaktelement 13 abschnittsweise eingeführt wird. Insbesondere werden die beiden Kontaktabschnitte 25 in die ersten Ausnehmungen 12c eingeschoben.

### Eine schematische Seitenansicht des vierten

Ausführungsbeispiels ist in **Fig. 17** ersichtlich, während **Fig. 18** eine schematische Schnittansicht gemäß der in Fig. 17 eingezeichneten Schnittebene F:F zeigt.

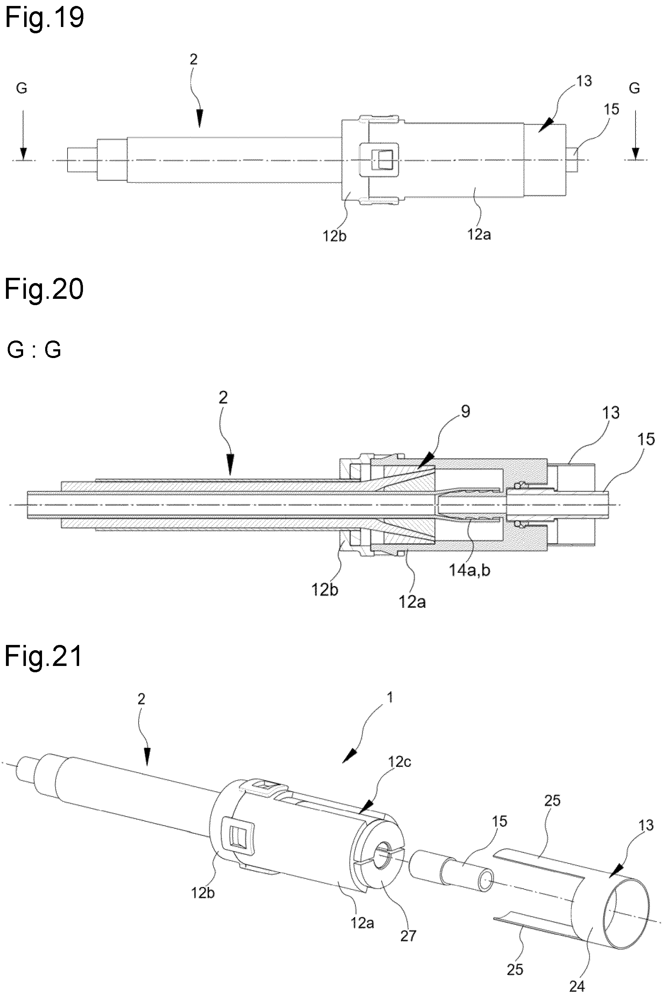

**Fig. 19** stellt eine schematische Seitenansicht des vierten Ausführungsbeispiels die gegenüber der in Fig. 17 dargestellten Seitenansicht um 90° verdreht ist) und **Fig. 20** zeigt eine Schnittansicht gemäß der in Fig. 19 eingezeichneten Schnittebene G:G.

**Fig. 21** betrifft eine schematische axonometrische Explosionsansicht des vierten Ausführungsbeispiels.

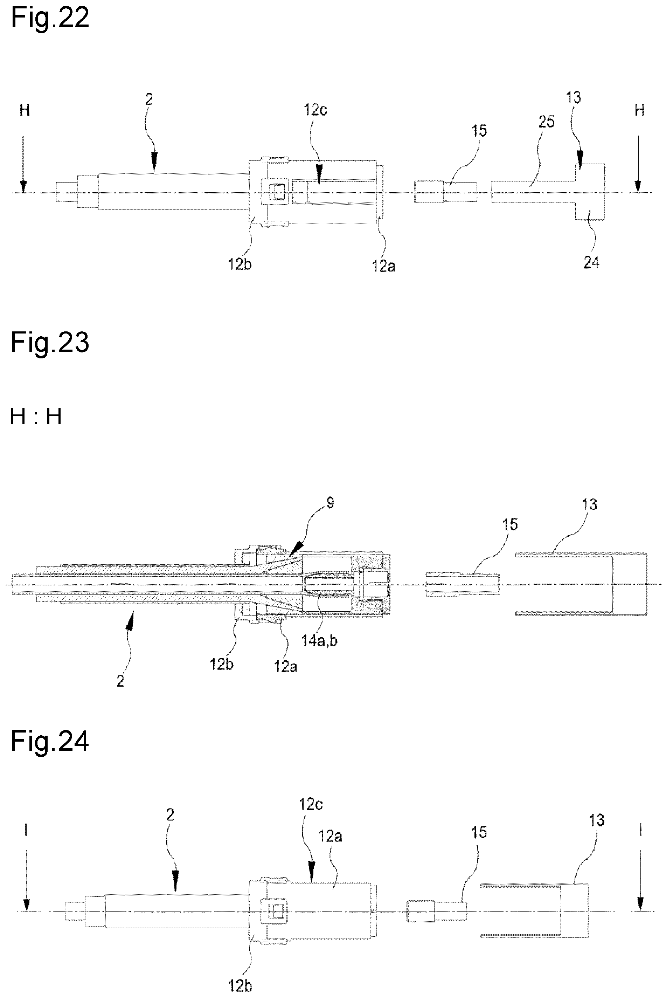

Eine schematische seitliche Explosionsansicht des vierten Ausführungsbeispiels ist in **Fig. 22** ersichtlich, während **Fig. 23** eine schematische Schnittansicht gemäß der in Fig. 22 eingezeichneten Schnittebene H:H zeigt.

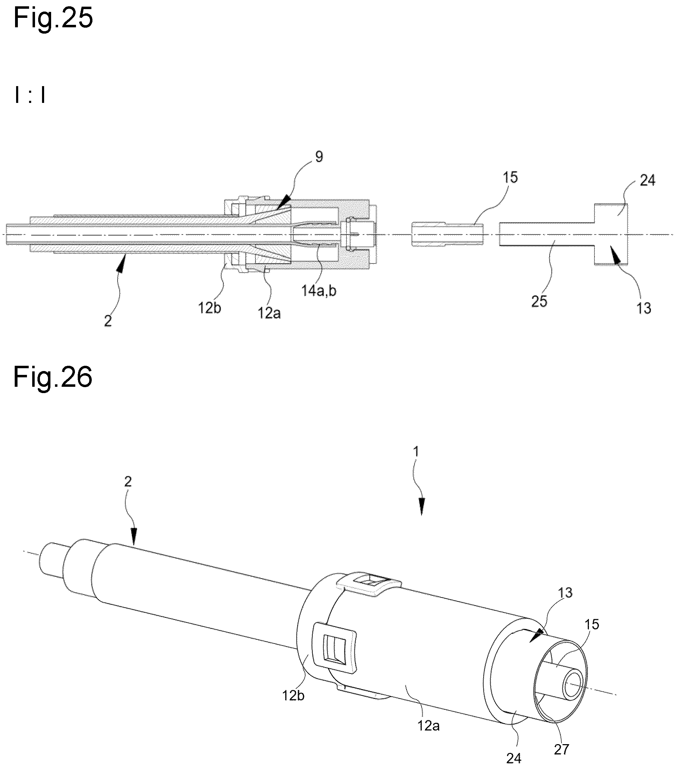

**Fig. 24** stellt eine schematische seitliche Explosionsansicht des vierten Ausführungsbeispiels dar (die gegenüber der in Fig. 22 dargestellten seitlichen Explosionsansicht um 90° verdreht ist) und **Fig. 25** zeigt eine schematische Schnittansicht gemäß der in Fig. 24 eingezeichneten Schnittebene I:I.

Eine schematische axonometrische Ansicht eines fünften Ausführungsbeispiels des Kontaktsystems 1 ist in **Fig. 26** dargestellt. Das fünfte Ausführungsbeispiel entspricht bis auf folgende Unterschiede im Wesentlichen dem dritten Ausführungsbeispiel:
- Im fünften Ausführungsbeispiel umfasst die Außenhülse 11 des Leiterkontaktelements 9 vollumfänglich einen Fortsatz 28, der sich parallel zur Mittelachse 4 erstreckt und der entlang der Mittelachse 4 gesehen über die Innenhülse 10 des Leiterkontaktelements 9 übersteht. Der Fortsatz 28 weist eine Abnehmerkontaktfläche 11b auf, die dem Kühlrohr 5 bzw. dem Kühlkanal 14 zugewandt ist. Das erste Abnehmerkontaktelement 13 kontaktiert den Fortsatz 28 mittels der Kontaktabschnitte 25 an der Abnehmerkontaktfläche 11b.

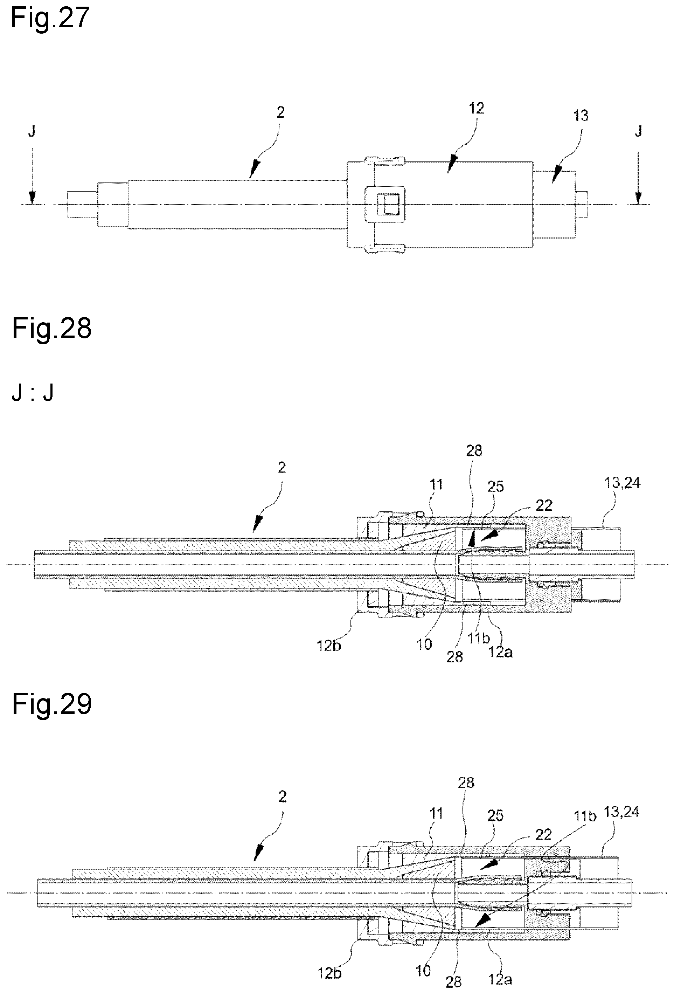

**Fig. 27** zeigt eine schematische Seitenansicht des fünften Ausführungsbeispiels, während **Fig. 28** eine schematische Schnittansicht gemäß der in Fig. 27 eingezeichneten Schnittebene J:J darstellt.

**Fig. 29** stellt eine schematische Schnittansicht dar, die gemäß der in Fig. 27 eingezeichneten Schnittebene J:J um 90° verdreht ist.

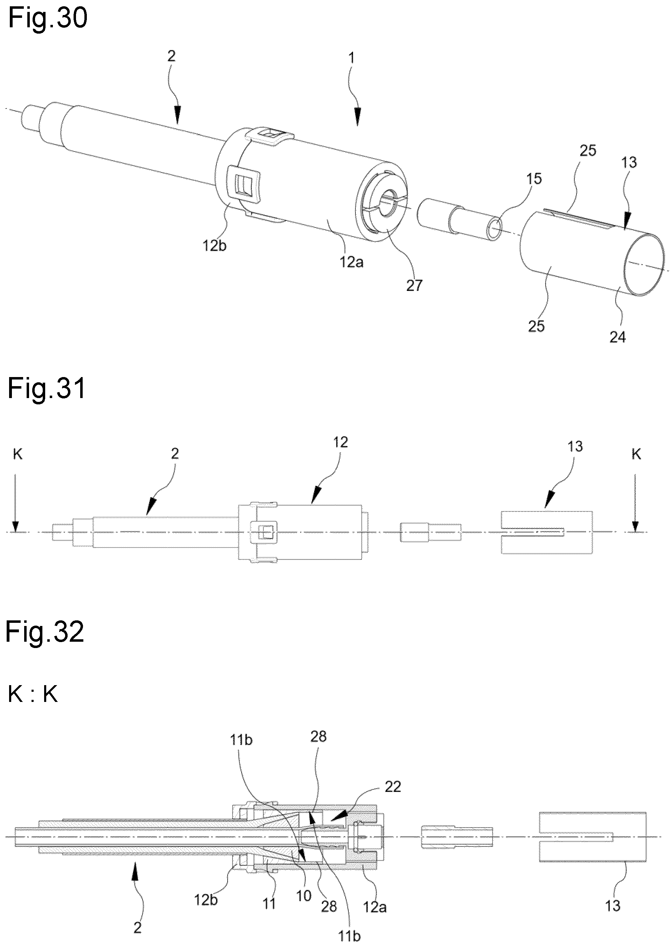

Eine schematische axonometrische Explosionsansicht des fünften Ausführungsbeispiels ist in **Fig. 30** sichtbar.

**Fig. 31** zeigt eine schematische seitliche Explosionsansicht des fünften Ausführungsbeispiels und **Fig. 32** eine schematische Schnittansicht gemäß der in Fig. 31 eingezeichneten Schnittebene K:K.

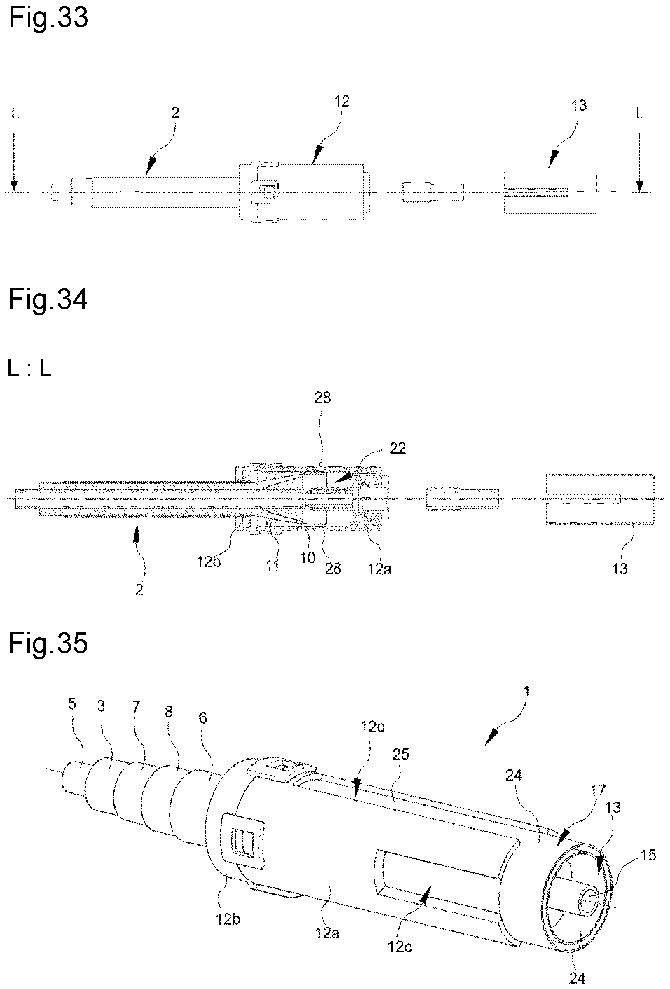

Eine schematische seitliche Explosionsansicht des fünften Ausführungsbeispiels (die gegenüber der in Fig. 31 dargestellten seitlichen Explosionsansicht um 90° verdreht ist) ist in **Fig. 33** dargestellt. **Fig. 34** zeigt eine schematische Schnittansicht gemäß der in Fig. 33 eingezeichneten Schnittebene L:L.

Eine schematische axonometrische Ansicht eines sechsten Ausführungsbeispiels des Kontaktsystems 1 ist in **Fig. 35** ersichtlich. Das sechste Ausführungsbeispiel entspricht im Wesentlichen einer Kombination aus dem zweiten und dem vierten Ausführungsbeispiel mit folgenden Unterschieden:
- Neben dem Leiterkontaktelement 9 ist nun auch das Schirmkontaktelement 19 innerhalb des Gehäuses 12 angeordnet.
- Das Kontaktelement 1 umfasst ein zweites Abnehmerkontaktelement 17 mit einem im Vergleich zum ersten Abnehmerkontaktelement 13 größeren Durchmesser. Genauso wie das erste Abnehmerkontaktelement 13 weist das zweite Abnehmerkontaktelement 17 einen zylinderrohrförmigen Basisabschnitt 24 sowie zwei vom Basisabschnitt 24 abragende Kontaktabschnitte 25 auf.
- Das Gehäuse 12, insbesondere der Hauptkörper 12a, weist zusätzlich zwei zweite Ausnehmung 12d auf, in die das zweite Abnehmerkontaktelement 17 abschnittsweise eingeführt wird. Insbesondere werden die beiden Kontaktabschnitte 25 in die zweiten Ausnehmungen 12d eingeschoben.

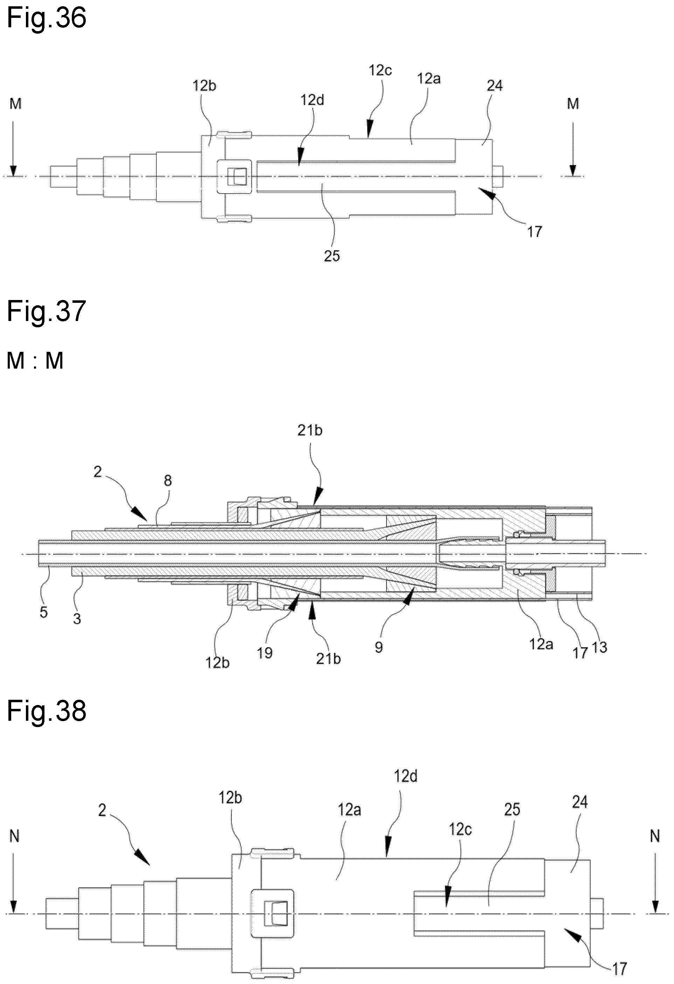

**Fig. 36** stellt eine schematische Seitenansicht des sechsten Ausführungsbeispiels dar, während **Fig. 37** eine schematische Schnittansicht gemäß der in Fig. 36 eingezeichneten Schnittebene M:M zeigt. Aus Fig. 37 ist ersichtlich, dass das zweite Abnehmerkontaktelement 17 die Außenhülse 21 des Schirmkontaktelements 19 an einer dem Kühlrohr 5 abgewandten Abnehmerkontaktfläche 21b kontaktiert.

### Eine schematische Seitenansicht des sechsten

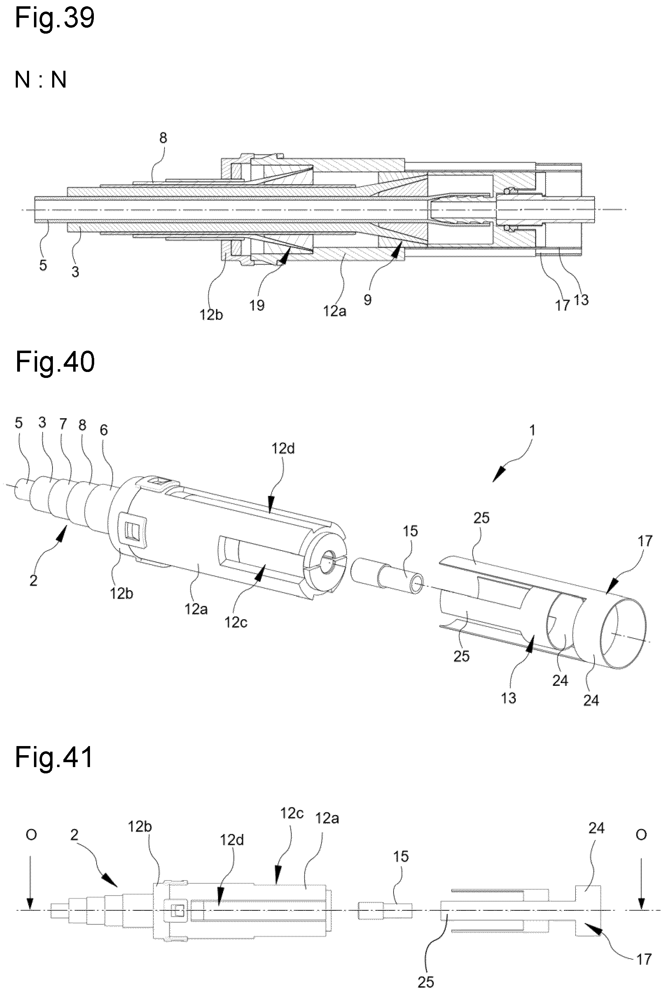

Ausführungsbeispiels (die gegenüber der in Fig. 36 dargestellten Seitenansicht um 90° verdreht ist) ist in **Fig. 38** erkennbar. **Fig. 39** zeigt eine schematische Schnittansicht gemäß der in Fig. 38 eingezeichneten Schnittebene N:N.

Eine schematische axonometrische Explosionsansicht des sechsten Ausführungsbeispiels ist in **Fig. 40** erkennbar.

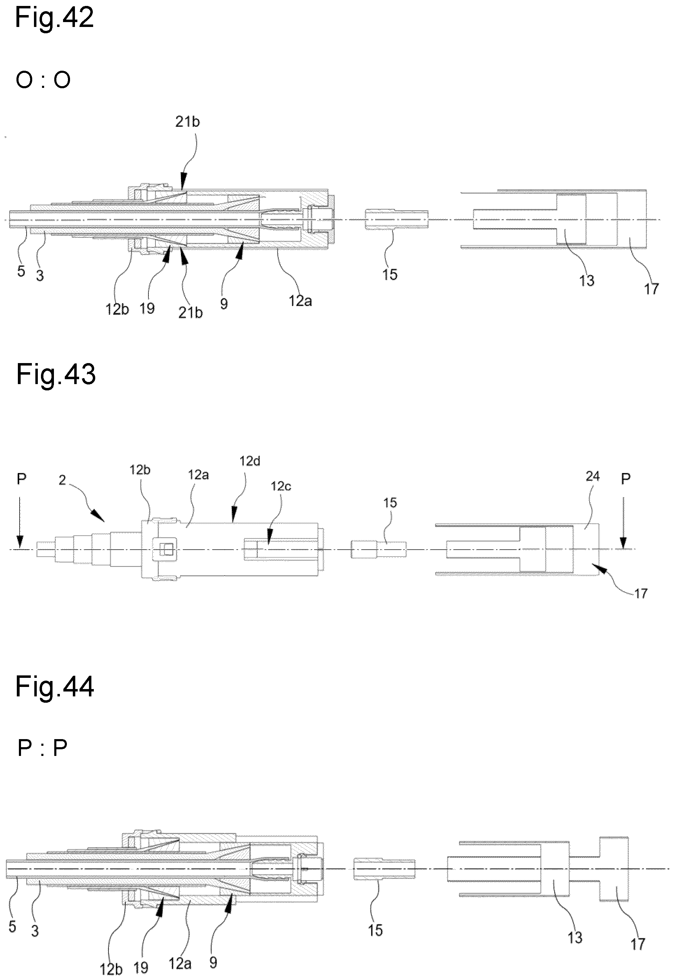

**Fig. 41** stellt eine schematische seitliche Explosionsansicht des sechsten Ausführungsbeispiels dar, während **Fig. 42** eine schematische Schnittansicht gemäß der in Fig. 41 eingezeichneten Schnittebene O:O zeigt.

**Fig. 43** offenbart eine schematische seitliche Explosionsansicht des sechsten Ausführungsbeispiels (die gegenüber der in Fig. 41 dargestellten seitlichen Explosionsansicht um 90° verdreht ist) und **Fig. 44** eine schematische Schnittansicht gemäß der in Fig. 43 eingezeichneten Schnittebene P:P.

Sämtlich Ausführungsbeispiele des Kontaktsystems 1 haben gemein, dass trotz Kontaktierung des elektrischen Leiters 3 mittels des Leiterkontaktelements 9 und/oder trotz Kontaktierung des Schirmgeflechts 8 mittels des Schirmkontaktelements 19 das Kühlrohr 5 bzw. der Kühlkanal 14 in seiner zentralen Position verbleibt und nicht aus dem Kabel 2 herausgeführt werden muss. Dadurch ist ein optimaler Wärmeübergang gesichert.

### BEZUGSZEICHENLISTE

- 1: Kontaktsystem
- 2: Kabel
- 3: elektrischer Leiter
- 4: Mittelachse des Kabels 2
- 5: Kühlrohr
5a erster Abschnitt des Kühlrohres 5
5b zweiter Abschnitt des Kühlrohres 5
5c Kühlrohrwandung
- 6: Kabelmantel
- 7: Isolationsschicht
- 8: Schirmgeflecht
- 9: Leiterkontaktelement
- 10: Innenhülse des Leiterkontaktelementes 9
10a Klemmfläche
- 11: Außenhülse des Leiterkontaktelementes 9
11a Leiterkontaktfläche (dem Kühlrohr 5 zugewandt)
11b Abnehmerkontaktfläche
- 12: Gehäuse
12a Hauptkörper
12b Endkappe
12c erste Ausnehmung
12d zweite Ausnehmung
- 13: erstes Abnehmerkontaktelement
- 14: Kühlkanal
14a Mittel zur Anbindung des Kühlrohres 5
14b Dorn/Zapfen als Mittel zur Anbindung des Kühlrohres 5
14c Oberfläche des Dorns/Zapfens
- 15: Kühlflüssigkeitsausgangsleitung
- 16: Mittel zur Anbindung der Kühlflüssigkeitsausgangsleitung 15
- 17: zweites Abnehmerkontaktelement
- 18: Anbindungsaufnahmevolumen
- 19: Schirmkontaktelement
- 20: Innenhülse des Schirmkontaktelementes 19
20a Klemmfläche
- 21: Außenhülse des Schirmkontaktelementes 19
21a Schirmkontaktfläche (dem Kühlrohr 5 zugewandt)
21b Abnehmerkontaktfläche (dem Kühlrohr 5 abgewandt)
- 22: erstes Aufnahmevolumen
- 23: -
- 24: Basisabschnitt
- 25: Kontaktabschnitt
- 26: Dichtring
- 27: Konterelement
- 28: Fortsatz

## Patentansprüche

1. Kontaktsystem (1) zur Verbindung eines elektrischen Leiters (3) mit einem Abnehmerkontaktelement (13) mittels eines Leiterkontaktelementes (9), das Kontaktsystem (1) wie folgt umfassend:
- das Leiterkontaktelement (9) und
- ein Kabel (2) mit
o einem sich entlang einer Mittelachse (4) des Kabels erstreckenden Kühlrohr (5) zum Transport von Kühlflüssigkeit,
o dem elektrischen Leiter (3), der das Kühlrohr (5) zumindest abschnittsweise umgibt,
o einem Kabelmantel (6), der den elektrischen Leiter (3) zumindest abschnittsweise umgibt
**dadurch gekennzeichnet, dass**
das Leiterkontaktelement (9) hülsenförmig ausgebildet ist und das Kühlrohr (5) entlang eines ersten Abschnitts (5a) umgibt,
wobei das Leiterkontaktelement (9) zweiteilig ausgeführt ist und eine Außenhülse (11) sowie eine von dieser zumindest abschnittsweise umgebene Innenhülse (10) aufweist,
wobei die Außenhülse (11) eine dem Kühlrohr (5) zugewandte Leiterkontaktfläche (11a) zur Kontaktierung des elektrischen Leiters (3) aufweist.

2. Kontaktsystem (1) nach Anspruch 1, **dadurch**
**gekennzeichnet, dass** die Innenhülse (10) eine Klemmfläche (10a) aufweist und der elektrische Leiter (3) zwischen der Leiterkontaktfläche (11a) und der Klemmfläche (10a) gefügt ist.

3. Kontaktsystem (1) nach einem der Ansprüche 1 bis 2,
**dadurch gekennzeichnet, dass** das Kabel (2) zusätzlich ein den elektrischen Leiter (3) umgebendes Schirmgeflecht (8) umfasst und ein hülsenförmiges Schirmkontaktelement (19) vorgesehen ist, welches das Kühlrohr (5) entlang eines zweiten Abschnitts (5b) umgibt,
wobei das Schirmkontaktelement (19) zweiteilig ausgeführt ist und eine Außenhülse (21) sowie eine von dieser zumindest abschnittsweise umgebene Innenhülse (20) aufweist,
wobei die Außenhülse (21) eine dem Kühlrohr (5) zugewandte Schirmkontaktfläche (21a) zur Kontaktierung des Schirmgeflechts (8) aufweist.

4. Kontaktsystem (1) nach Anspruch 3, **dadurch**
**gekennzeichnet, dass** die Innenhülse (20) eine Klemmfläche (20a) aufweist und das Schirmgeflecht (8) zwischen der Schirmkontaktfläche (21a) und der Klemmfläche (20a) gefügt ist.

5. Kontaktsystem (1) nach einem der Ansprüche 1 bis 4, **dadurch gekennzeichnet, dass** das Kontaktsystem (1) ein Gehäuse (12) umfasst, in welchem Gehäuse (12) das Leiterkontaktelement (9) angeordnet ist und welches Gehäuse (12) einen Hauptkörper (12a) und eine Endkappe (12b) aufweist, wobei Hauptkörper (12a) und Endkappe (12b) kraftschlüssig und/oder formschlüssig miteinander verbunden sind.

6. Kontaktsystem (1) nach einem der Ansprüche 3 bis 4 und nach Anspruch 5, **dadurch gekennzeichnet, dass** das Schirmkontaktelement (19) im Gehäuse (12) angeordnet ist.

7. Kontaktsystem (1) nach einem der Ansprüche 5 bis 6, **dadurch gekennzeichnet, dass** Hauptkörper (12a) und Endkappe (12b) mittels einer Schnappverbindung miteinander verbunden sind.

8. Kontaktsystem (1) nach einem der Ansprüche 5 bis 7, **dadurch gekennzeichnet, dass** das Gehäuse (12) einen Kühlkanal (14) aufweist und Mittel (14a) zur Anbindung des Kühlrohres (5) an den Kühlkanal (14) vorgesehen sind, wobei die Mittel (14a) vorzugsweise einstückig mit dem Hauptkörper (12a) ausgebildet sind.

9. Kontaktsystem (1) nach Anspruch 8, **dadurch**
**gekennzeichnet, dass** es sich bei den Mitteln (14a) zur Anbindung des Kühlrohres (5) um die Wandung des Kühlkanals (14) handelt, welche Wandung an ihrer dem Kühlrohr (5) zugewandten Stirnfläche als ringförmiger, in das Kühlrohr (5) einschiebbarer Dorn oder Zapfen (14b) ausgebildet ist.

10. Kontaktsystem (1) nach Anspruch 9, **dadurch**
**gekennzeichnet, dass** eine dem Kühlkanal (14) abgewandte Oberfläche (14c) des Dorns oder Zapfens (14b) von einem Anbindungsaufnahmevolumen (18) im Gehäuse (12) zur Aufnahme einer zumindest teilweise abgelösten Kühlrohrwandung (5c) zumindest abschnittsweise umgeben ist.

11. Kontaktsystem (1) nach einem der Ansprüche 5 bis 10, **dadurch gekennzeichnet, dass** das Gehäuse (12) Mittel (16) zur Anbindung einer Kühlflüssigkeitsausgangsleitung (15) aufweist, wobei es sich bei den Mitteln (16) vorzugsweise um eine Aufnahme für ein separates Anschlussrohr handelt.

12. Kontaktsystem (1) nach einem der Ansprüche 1 bis 11, **dadurch gekennzeichnet, dass** das Kontaktsystem (1) das erstes Abnehmerkontaktelement (13) umfasst, welches die Außenhülse (11) des Leiterkontaktelements (9) kontaktiert.

13. Kontaktsystem (1) nach Anspruch 5 und nach Anspruch 12, **dadurch gekennzeichnet,**
- **dass** das Kontaktsystem (1) ein erstes Aufnahmevolumen (22) zur abschnittsweisen Aufnahme des ersten Abnehmerkontaktelements (13) aufweist, wobei das erste Aufnahmevolumen (22) zumindest abschnittsweise zwischen der Außenhülse (11) und dem Gehäuse (12) ausgebildet ist, oder
- **dass** das Gehäuse (12) eine erste Ausnehmung (12c) zur abschnittsweisen Aufnahme des ersten Abnehmerkontaktelements (13) aufweist, oder
- **dass** die Außenhülse (11) einen Fortsatz (28) umfasst, der eine Richtungskomponente aufweist, die parallel zur Mittelachse (4) ist, und der entlang der Mittelachse (4) gesehen über die Innenhülse (10) übersteht, wobei das Abnehmerkontaktelement (13) den Fortsatz (28), vorzugsweise an einer dem Kühlrohr (5) zumindest abschnittsweise zugewandten Abnehmerkontaktfläche (11b) kontaktiert.

14. Kontaktsystem (1) nach einem der Ansprüche 12 bis 13, **dadurch gekennzeichnet, dass** sich das erste Abnehmerkontaktelement (13) entlang der Mittelachse (4) erstreckt und einen Basisabschnitt (24) und zumindest einen vom Basisabschnitt (24) abragenden Kontaktabschnitt (25) zur Kontaktierung der Außenhülse (11) aufweist.

15. Kontaktsystem (1) nach einem der Ansprüche 3 bis 4 oder nach einem der Ansprüche 5 bis 14 sofern abhängig von Anspruch 3, **dadurch gekennzeichnet, dass** das Kontaktsystem (1) ein zweites Abnehmerkontaktelement (17) umfasst, welches die Außenhülse (21) des Schirmkontaktelements (19), vorzugsweise an einer dem Kühlrohr (5) zumindest abschnittsweise abgewandten Abnehmerkontaktfläche (21b), kontaktiert.

16. Kontaktsystem (1) nach Anspruch 5 und nach Anspruch 15, **dadurch gekennzeichnet, dass** das Gehäuse (12) eine zweite Ausnehmung (12d) zur abschnittsweisen Aufnahme des zweiten Abnehmerkontaktelements (17) aufweist.

17. Kontaktsystem (1) nach einem der Ansprüche 15 bis 16, **dadurch gekennzeichnet, dass** sich das zweite Abnehmerkontaktelement (17) entlang der Mittelachse (4) erstreckt und einen Basisabschnitt (24) und zumindest einen vom Basisabschnitt (24) abragenden Kontaktabschnitt (25) zur Kontaktierung der Außenhülse (21) aufweist.

18. Kontaktsystem (1) nach Anspruch 14 und/oder 17, **dadurch gekennzeichnet, dass** es sich beim Basisabschnitt (24) um ein Zylinderrohr handelt und der Kontaktabschnitt (25) entlang der Mittelachse (4) gesehen einen verlängerten Abschnitt des Zylinderohrs ausbildet.
